# EUROPEAN PATENT APPLICATION

(11) **EP 1 253 536 A1**
(43) Date of publication of application: **30.10.2002**
(21) Application number: 02008294.7
(22) Date of filing: 23.04.2002
(51) Int. Cl.: G06F 17/60

(54) **Product development management system, product development management method, product reliability decision system and product reliability decision method**

(30) Priority: 24.04.2001 JP 2001125682
(71) Applicant: Kabushiki Kaisha Toshiba, Tokyo 105-8001 (JP)
(72) Inventor: Wada, Shinobu, 1-1 Shibaura 1-chome Minato-ku Tokyo 105 (JP); Kawate, Keiichi, 1-1 Shibaura 1-chome Minato-ku Tokyo 105 (JP)
(74) Representative: HOFFMANN - EITLE

(57) **Abstract**

A product development management system, comprising: a product database storage unit (17) configured to register information relating to a product for which an order is registered; a product knowledge database storage unit (27) to register information relating to a product having a past record of manufactures; and a central processing control unit configured to have a decision module configured to forecast a product after manufacturing by referring to said product database storage unit (17) and said product knowledge database unit (27) and decide whether said product satisfies predetermined conditions.

## Description

### CROSS REFERENCE TO RELATED APPLICATIONS

This application is based upon and claims the benefit of priority from the prior Japanese Patent Applications No. P2001-125682, filed on Apr 24, 2001; the entire contents of which are incorporated herein by reference.

### BACKGROUND OF THE INVENTION

### 1. Field of the Invention

The present invention relates to a product development management system, a product development management method, a product reliability decision system and a product reliability decision method, which store existing technologies and resource information in their database and perform a development management such as manufacturing products using them as decision criteria.

### 2. Description of the Related Art

For example, in an order entry of manufacturing products, manufacturers such as manufacture of semiconductor products, machine products, and system establishments, the products have been sometimes made in accordance with the specification according to request of customers heretofore. In such a case, an approver judges a situation under all of conditions as a decision of the organization of a manufacturing enterprise (company).

To be concrete, in developing semiconductor products, as representative factors enumerated are (1) a factor relating to a business profit such as an investment recovery model, (2) a marketing factor such as a market trend, a customer's demand and a condition of a competition company, (3) various technical factors such as manufacturing processes, a constituent circuit, a material used, a package technology and reliability, (4) a factor relating to productivity such as resources including manufacturing plant conformance, man/fund/line capacitor, in addition to complicated factors such as a relation with a customer enterprise, an improvement of corporate image and a proof of technical capability as derivation effects of product development, differentiation as an enterprise, and conformance with global standard. An approver having predetermined authority makes a synthetic judgment based on this information at several watersheds (for example, an order entry judgment, a trial manufacturing judgment, a mass production judgment and an increased production judgment) in the product development.

As one of important factors to get CS (customer satisfaction), product quality (reliability) is mentioned. Accordingly, this reliability is a very important factor for the approver when he/she makes the judgment.

Herein, as an example of the manufactured product, the reliability of the semiconductor products will be described.

Two-sidedness is required for the quality of the semiconductor products. One is, as a matter of course, that the semiconductor products shows a high quality in terms of their functions, and the other is that the semiconductor products do not cause problems when they are used. Specifically, as the quality of the semiconductor products, enumerated are (A) design quality such as a circuit design (function), a product design (structural quality), a reliability design (time factor), (B) production quality such as variations (initial quality), lot-to-lot variation (initial quality). Characteristics owing to the production quality sometimes cause faultiness in reliability. This can be prevented by improving the conformance of the design quality in many cases. Ideally, it is preferable to evaluate the production quality on designing perfectly regardless of time factors.

In addition, as deterioration factors of the semiconductor products, the followings are enumerated.
(A) Minute crystal defects create characteristic variations owing to the material constituting the semiconductor substrate, thus causing an increase in leak current, lowering of a withstand voltage, an increase in noises, and a variation of a retention time of a memory.
(B) New defects are generated in a step of treating the semiconductor products at a high temperature.
(C) Contamination brought about from the outside causes characteristic variations in the long term.
(D) Breakdown of an insulator
(E) Electric field stress inside the semiconductor product becomes serious resulting in the pursuit of microfabrication and performance improvement, and variations of charges in the insulator are caused.
(F) Deterioration due to invasion of water from the outside and corrosion of wiring.
(G) Deterioration due to voids by mutual diffusion of various different metals in a connection wiring, generation of an intermetallic compound of, for example, aluminum and gold, and stress from a package accommodating a semiconductor chip
(H) Deterioration owing to lack of manufacturing apparatus equipment

As to these information as the deterioration factors, even if they can be enumerated as obstacles by manufactures, it is difficult for the manufactures to link the occurrence cause of them to the obstacles, and impossible to make them clear.

The approver makes an overall judgment for the judgment factors in the production development based on a personal report, a conference and an individual system and the like. In this case, the approver relies on his/her experience and knowledge in many cases. Also this approver often changes depending on developing steps.

As described above, the judgement based on the conventional approver's experience and knowledge is roughly divided into a controversial point viewed from the aspect of manufacturing enterprise activities and a controversial point viewed from the aspect of customers.

From the viewpoint of the manufacturing enterprise activities, the following controversial points are enumerated.
(A) Since a rule for the whole of an enterprise and a macro system for accumulating knowledge and utilizing the knowledge do not exist, it is hard to reuse the knowledge such as a correlation between a judgment and a result in past product developments, a background for the judgement and a problem occurrence case.
(B) Since organizations dispersed for each of manufacturing enterprise activity factors exist, a difference may occur in an information update frequency, a determinacy of information and the like. Accordingly, there is a possibility that the current information with a definite quality is not offered in the judgment. To be concrete, information is not obtained, which is updated in real time for development resources of products that have been developed in the enterprise or have possibility of beginning the development (especially for technical experts) and whole schedule. Moreover, it is sometimes hard to fix the optimum order of priority as enterprises for the development. Moreover, atypical information possessed by the person responsible for organization, which is useful for the approver's judgement, which is, for example, sensitive current business information such as customers sense, real time technology development conditions, a risk of the technology development condition, and a trend of law revisions, is hard to convey. Alternatively, much time is taken to convey.
(C) Since a plurality of specialized organizations including a product development section and a factor technical development section such as manufacturing apparatuses and part materials participate in each development proceeding stage, there is a possibility that a future problem occurrence forecast including a development schedule of the factor technology can not be performed precisely in an early stage of the product development.

Particularly, the products like the semiconductor products, which require precise and complex manufacturing processes which are rapidly altered, have a risk of incapability of manufacturing good products with certainty. A system and establishment of techniques for developing/manufacturing products with the highest quality at the fastest speed are required.

### SUMMARY OF THE INVENTION

A product development management system, comprising: a product database storage unit configured to be registered information relating to a product for which an order is registered; a product knowledge database storage unit to be registered information relating to a product having a past record of manufactures; and a central processing control unit configured to have a decision module configured to forecast a product after manufacturing by referring to said product database storage unit and said product knowledge database unit and decide whether said product satisfies predetermined conditions.

A computer implemented product development management method, comprising: registering information relating to a product for which an order is received with a product database storage unit; further registering a verification result in each manufacturing process of said product for which an order is received with said product database storage unit; and referring to said product database storage unit and a product knowledge database storage unit with which information relating to a product having a past record of manufactures is registered, and forecasting a product after manufacturing, thus deciding whether said product satisfies a predetermined condition.

A computer implemented product development management method, comprising: registering information relating to a product for which an order is received with a product database storage unit; referring to said product database storage unit with which the information for which an order is received is registered and a product knowledge database storage unit in which information of a product having a past record of manufactures is stored, and forecasting said product after manufacturing, for which an order is received, thus first deciding a reliability of said product for which an order is received; referring to the reliability of said product form which an order is received, the reliability being obtained in first deciding the reliability, and approving a design process of said product for which an order is received; upon receipt of the approval of the design process, performing the design process of said product for which an order is received, and further registering a verification result of said design process with said product database storage unit; referring to said product database storage unit with which the verification result registered and said product knowledge database storage unit, and forecasting said product after manufacturing, for which an order is received, thus second deciding a reliability of said product for which an order is received; and referring to the reliability of said product for which an order is received, the reliability being obtained in second deciding the reliability, and approving a mass production process of said product for which an order is received.

A computer implemented product development management method, comprising: registering information of a product for which an order is received with a product database storage unit; referring to said product database storage unit with which the information of said product for which an order is received is registered and a product knowledge database storage unit in which information of a product having a past record of manufactures is stored, and forecasting said product after mass manufacturing, for which an order is received, thus deciding a reliability of said product for which an order is received; referring to the reliability of said product for which an order is received, the reliability being obtained in deciding the reliability, and approving a design process of said product for which an order is received; upon receipt of the approval of said design process, performing the design process of said product for which an order is received, and further registering a verification result of said design process with said product database; referring to said product database storage unit with which the verification result of said design process is further registered and said product knowledge database storage unit, and forecasting said product after mass manufacturing, for which an order is received, thus second deciding a reliability of said product for which an order is received; referring to the reliability of said product for which an order is received, the reliability being obtained in second deciding the reliability, and approving a simulation process of said product for which an order is received; upon receipt of the approval of said simulation process, performing a simulation process of said product for which an order is received, and further registering a verification result of said simulation process with said product database; referring to said product database storage unit with which the verification result of said simulation process is further registered and said product knowledge database storage unit, and forecasting said product after mass manufacturing, for which an order is receive, thus deciding a reliability of said product for which an order is received; and referring to the reliability of said product for which an order is received, the reliability being obtained in the third deciding the reliability, and approving a mass production process of said product for which an order is received.

A computer implemented product development management method, comprising: registering information for which an order is received with a product database storage unit; referring to said product database storage unit with which the information of said product for which an order is received and a product knowledge database storage unit in which information of a product having a past record of manufactures is stored, and forecasting said product after mass manufacturing, for which an order is received, thus first deciding a reliability of said product for which an order is received; referring to the reliability of said product for which an order is received, the reliability being obtained in first deciding the reliability, and approving a design process of said product for which an order is received; upon receipt of the approval of said design process, performing the design process of said product for which an order is received, and further registering a verification result of said design process with said product database storage unit; referring to said product database storage unit with which the verification result of said design process is further registered and said product knowledge database storage unit, and forecasting said product after manufacturing, for which an order is receive, thus second deciding a reliability of said product for which an order is received; referring to the reliability of said product for which an order is received, the reliability being obtained in second deciding the reliability, and approving a simulation/trial manufacturing process of said product for which an order is received; upon receipt of the approval of said simulation/trial manufacturing process, performing the simulation/trail manufacturing process of said product for which an order is received, and further registering a verification result of said simulation/trial manufacturing process with said product database; referring to said product database storage unit with which the verification result of said simulation/trial manufacturing process is further registered and said product knowledge database storage unit, and forecasting said product after mass manufacturing, for which an order is receive, thus third deciding a reliability of said product for which an order is received; and referring to the reliability of said product for which an order is received, the reliability being obtained in third deciding the reliability, and approving a mass production process of said product for which an order is received.

A product reliability decision system, comprising: an essential technology qualification database storage unit configured to be register a past record of an essential technology for each manufacturing process; a technology factor qualification database storage unit configured to be registered a past record of a technology factor for each; and a central processing control unit configured to have a reliability decision module configured to refer to said essential technology qualification database storage unit and said technology factor qualification database storage unit, forecasts a product after manufacturing, and decides whether said product satisfies a predetermined condition.

A computer implemented product reliability decision method, comprising: referring to an essential technology qualification database storage unit with which a past record of each of essential technologies is registered to deciding said essential technology; referring to a technology factor qualification database storage unit with which a past record of a technical factor for each of said essential technologies is registered to decide the technology factor of each of said essential technologies; and upon receipt of the decision of said essential technology obtained in deciding said essential technology and upon receipt of the decision of said technology factor for each of said essential technologies obtained in deciding said technology factor, a product after manufacturing is forecasted, and a reliability whether said product satisfies a predetermined condition is decided.

### BRIEF DESCRIPTION OF THE DRAWINGS

Fig. 1 is a system configuration view of a product development management system according to a first embodiment of the present invention.
Fig. 2 is a diagram illustrating a relation between a dealing stage and a development stage in the product development management system according to the first embodiment of the present invention.
Fig. 3 is a diagram illustrating a relation between each server and each terminal in the product development management system according to the first embodiment of the present invention.
Fig. 4 is a function block diagram of a management server for accomplishing functions of the product development management system according to the first embodiment of the present invention.
Fig. 5 is a diagram illustrating concrete data items of a product database according to the first embodiment of the present invention.
Fig. 6 is a diagram illustrating concrete data items of a verification function database according to the first embodiment of the present invention.
Fig. 7 is a diagram illustrating concrete data items of a knowledge database according to the first embodiment of the present invention.
Fig. 8 is a diagram illustrating concrete data items of a business management database according to the first embodiment of the present invention.
Fig. 9 is a diagram illustrating an example of a company standard model according to the first embodiment of the present invention.
Figs. 10A and 10B are diagrams illustrating data items registered with the product database and the function verification database in each step of the flowchart of the company standard model according to the first embodiment of the present invention.
Fig. 11 is a flowchart in an approval module of the management server according to the first embodiment of the present invention.
Fig. 12 is a flowchart illustrating processings of a P1 gate approval factor reference module of the management server according to the first embodiment of the present invention.
Fig. 13 is a flowchart illustrating processings of a P2 gate approval factor reference module of the management server according to the first embodiment of the present invention.
Fig. 14 is a flowchart illustrating processings of a P3 gate approval factor reference module of the management server according to the first embodiment of the present invention.
Fig. 15 is a diagram illustrating an example of a business unit standard model in the case where the products are ASIC.
Fig. 16 is a flowchart of the P1 gate approval factor reference module in step S267 of Fig. 15 in the case where the products are ASIC.
Fig. 17 is a diagram illustrating an example of a business unit standard model in the case where the products are CISC or ROM.
Fig. 18 is a decision processing flowchart for a P1 gate in step S306 of Fig. 17 in the case where the products are CISC or ROM.
Fig. 19 is a function block diagram illustration the details of an IQS decision server 20 in a product reliability decision system according to a second embodiment of the present invention.
Fig. 20 is a schematic view concretely illustrating an input/output and decision method of the IQS decision server according to the second embodiment of the present invention.
Fig. 21 is a diagram for explaining a reliability decision and a factor technology performed in each manufacturing process of semiconductor products in an IQS decision according to the second embodiment of the present invention.
Fig. 22 is a diagram illustrating a relation between a technology qualification and a factor technology qualification in each manufacturing process in the IQS decision according to the second embodiment of the present invention.
Fig. 23 is a diagram illustrating a constitution of a product knowledge database and a decision order of an IQS decision module according to the second embodiment of the present invention.
Figs. 24A and 24B are flowcharts of a QFA decision by the IQS decision module according to the second embodiment of the present invention.

### DETAILED DESCRIPTION OF THE PREFERRED EMBODIMENTS

Next, embodiments of the present invention will be described with reference to the accompanying drawings. In the following descriptions, the same and similar constituent components are denoted by the same and similar reference numbers. Herein, as an example of a manufactured product, an example of an embodiment of a product development management system, a product development management method, a product reliability decision system and a product reliability decision method as to a semiconductor product will be described.

Generally and as it is conventional in the representation of system, it will be appreciated that the various drawings are not drawn to scale from one figure to another nor inside a given figure.

In the following descriptions, numerous specific details are set fourth such as specific input data and output data, etc. to provide a thorough understanding of the present invention. However, it will be obvious to those skilled in the art that the present invention may be practiced without such specific details. In other instances, well-known systems have been shown in block diagram form in order not to obscure the present invention in unnecessary detail.

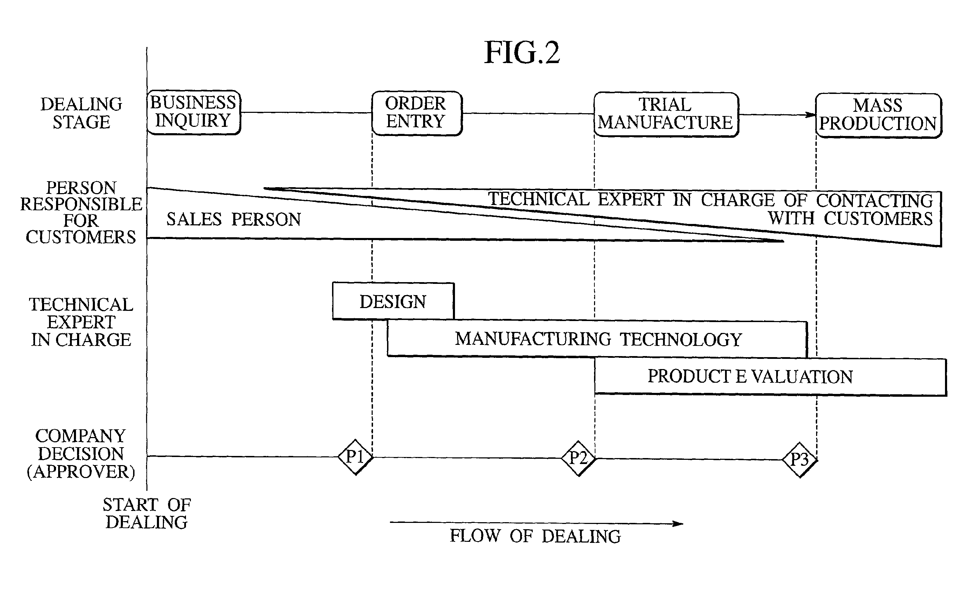

As shown in Fig. 2, dealings in the product development management system according to the embodiment of the present invention advances to a mass production stage via a business inquiry stage, an order entry stage and a trial manufacture stage.

Herein, in accordance with the stage of the dealings, a person in charge of talking with customers changes. To be concrete, a salesperson who has not so much technical knowledge is a person in charge of the order entry stage. As the stage of the dealings advances, a specialized technical knowledge becomes necessary gradually. In such a case, a technical expert in charge of contacting with customers is a person responsible for customers.

In response to the dealing stage and the instruction of the person responsible for customers, a technical expert in charge of operations changes. Specifically, a technical expert in charge of a design in the stage from an a business inquiry to specification determination, a technical expert in charge of manufacturing technology in the stage at which the design is completed, and a technical expert, who performs the product evaluation, in the stage the manufacturing technology is decided. In addition, the operations are not conducted based on the specification provisionally determined, and the change and review of the specification are performed at any time. Accordingly, a plurality of operators operates in parallel.

Furthermore, in accordance with these dealing stages, as a company decision, an approver having power gives the responsible approval indicating whether the operations can be advanced to a next stage in the P1 to P3 gates. For example, in the dealing stage advances from the business inquiry stage enters the order entry stage, the approvers gives the approval. Upon receipt of this approval, the dealings enter the order entry stage, and the manufacturing technology development is performed. By the approval of the approver in the order entry stage, the technical expert in charge of the operations is instructed. Thus, the approver can give the quick and appropriate instruction, and the technical expert in charge of the operations can perform the development smoothly.

### (First Embodiment)

### (System Configuration)

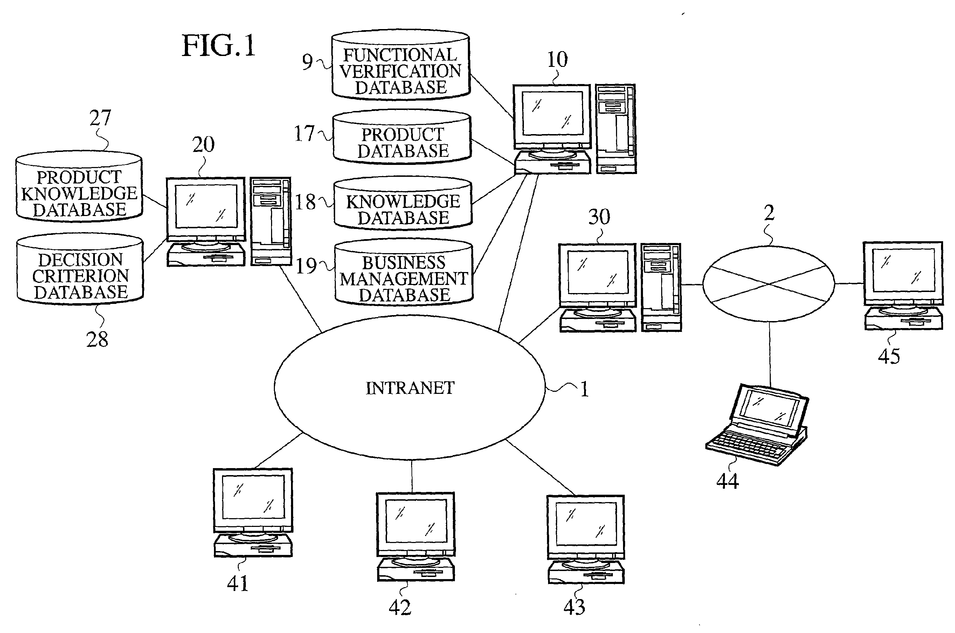

As shown in Fig. 1, a product development management system according to a first embodiment of the present invention is constituted by a management server 10, an IQS decision server 20, a gateway server 30, a person responsible-for-customer terminal 41, a technical expert terminal 42 and an approver terminal 43. These terminals are coupled to each other through an intra-LAN (Intranet) 1.

Moreover, the gateway server 30 is coupled to the Internet 2, and coupled to a person-responsible-for-customer portable terminal 44 and a customer terminal 45 through the Internet 2. The person responsible for customers portable terminal 44 and the customer terminal 45 are coupled to the intra-LAN (Intranet) 1 through access points such as the gateway server 30, the Internet 2 and a provider. The person responsible-for-customer portable terminal 44 and the customer terminal 45 may be coupled to the in-company LAN 2 through the gateway server 30 without intervening the Internet 2 therebetween.

The management server 10 is a server for controlling the product development management. To the management server 10, coupled are a function verification database 9 describing a test method which is previously set in accordance with the specification and the delivery date of a product for which an order was accepted, and information relating to a circuit verification and the like; a product database 17 storing information relating to the ordered product; a knowledge database 18 accumulating information such as a development history, a technical expert information and a market information as knowledge; and a business management database 19 storing allocations of resources, and the progress of the development of manufacturing processes corresponding to a company standard model or a business unit standard model.

Furthermore, the IQS decision server 20 is a server for deciding the reliability of the product newly developed, based on existing technical information. To the IQS decision server 20, coupled are a product knowledge database 27 storing the existing technical information and a decision criterion database 28 storing a reliability decision criterion. The gateway server 30 acts as an intermediary so that the person responsible-for-customer portable terminal 44 and the customer terminal 45 can be coupled to the intra-LAN (Intranet) 1, and a satisfactory security system such as a terminal approval and fire wall is constructed therein. In addition, when the terminal is certified, the gateway server 30 may possess a call back function.

The person responsible-for-customer terminal 41, the technical expert terminal 42, the approver terminal 43, the person responsible-for-customer portable terminal 44 and the customer terminal 45 are information appliances such as general personal computers, PDA, portable telephones. Furthermore, this management system can be used more extensive environments on the Internet.

Herein, the function verification database 9, the product database 17, the knowledge database 18, the business management database 19, the product knowledge database 27 and the decision criterion database 28 are recorded onto a recording medium such as an external memory device of computers, a semiconductor memory, a magnetic disc, an optical disc, a magneto-optical disc and a magnetic tape. Herein, to be concrete, the recording medium includes a floppy disc, a hard disc, a CD-ROM, a MO disc, a cassette tape, an open reel and the like.

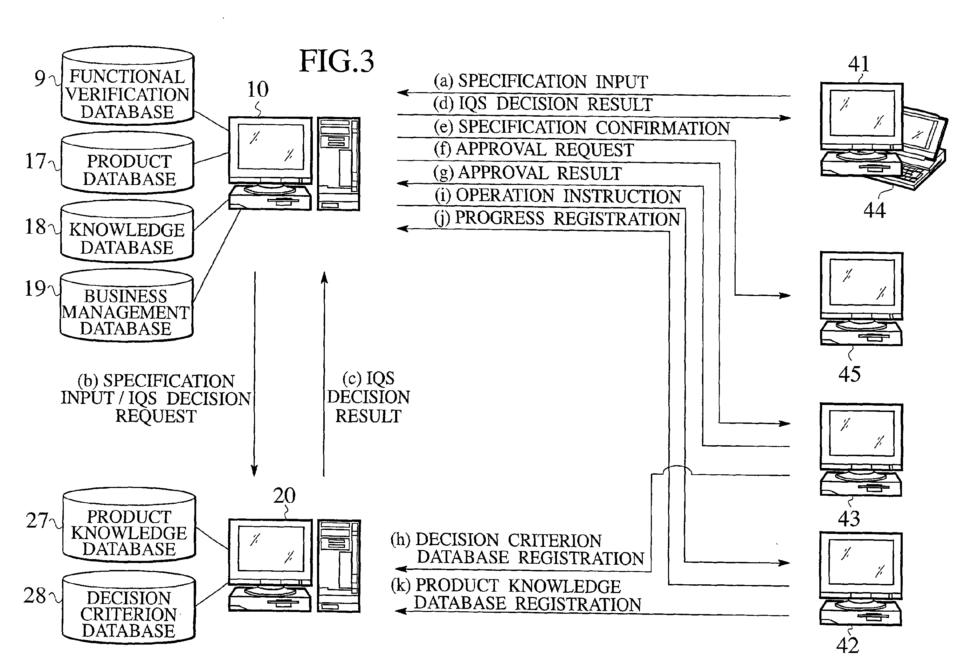

Fig. 3 is a diagram illustrating a relation between each server and each terminal in the product development management system.
(A) The specification provisionally determined by the negotiations between the customer and the responsible person of the manufacturing enterprise for the customer is input to the management server 10 by use of the person responsible-for-customer terminal 41 or the person responsible-for-customer portable terminal 44 (a). Upon receipt of this information, the management server 10 inputs the specification to the IQS decision server 20, and request the IQS decision server 20 to execute the IQS decision (b). The management server 10 receives the IQS decision result from the IQS decision server 20 (c), and transmits the IQS decision result to the person responsible-for-customer terminal 41 or the person responsible-for-customer portable terminal 44 (d).
(B) If the decision that the acceptance of the order for the product is to be permitted was done based on the provisional specification, the management server 10 inquires more detailed specification confirmation from the customer terminal 45 (e).
(C) Depending on the progress of the dealings, the management server 10 requests the approval from the approver 43 at a timing determined by the company standard model or the business unit standard model (f). In response to the request, the approver terminal 43 transmits the approval result to the management server 10 (g). At this time, the approver terminal 43 can refer to the function verification database 9, the product database 7, the knowledge database 18 and the business management database 19 of the management server 10 in accordance with necessity. Moreover, the approver terminal 43 may request of the IQS decision server 20 to offer the IQS decision result to the approver terminal 43, thus acquiring the IQS decision result. In addition, the approver terminal 43 may register or update, in the IQS decision server 20, the decision criterion for performing the IQS decision (h).
(D) The management server 10 offers the operation instruction (i), and the technical expert terminal 42 registers the progress of the manufacturing processes with the management server 10, and receives the subsequent operation instruction from the management server 10 (j). Furthermore, the technical expert terminal 42 allows the IQS decision server 20 to register a past manufacture record of the product with the product knowledge database 27 (k).

As described above, the function verification database 9, the product database 17, the knowledge database 18, the business management database 19, the product knowledge database 27 and the decision criterion database 28 are updated to the newest information by the person responsible-for-customer terminal 41, the technical expert terminal 42, the approver terminal 43, the person responsible-for-customer portable terminal 44 and the customer terminal 45 at any time.

### (Management Server)

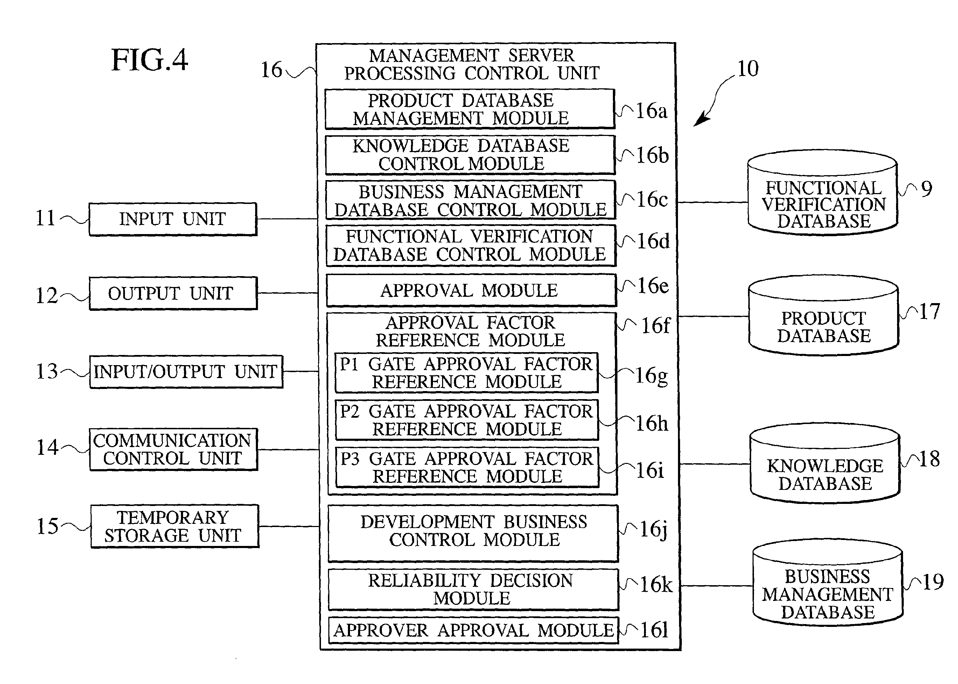

As shown in Fig. 4, the management server 10 of the product development management system according to the first embodiment of the present invention is constituted by an input unit 11, an output unit 12, an input/output unit 13, a communication control unit 14, a temporary storage unit 15, a management server processing control unit 16, the function verification database 9, the product database 17, the knowledge database 18 and the business management database 19.

The input unit 11 is constituted by a keyboard, a mouse and the like, and the output unit 12 is constituted by a display device such as a liquid display and a CRT display, and a printing apparatus such as an ink-jet printer and a laser printer, and the like. The input/output unit 13 is an interface with an external device, and the external device is a storage device such as a CD-ROM, a MO and a ZIP, and the like. The communication control unit 14 serves as an interface for coupling to the intra-LAN (Intranet) 1. A ROM and a RAM are installed in the temporary storage unit 15. The ROM functions as a program memory and the like storing a program executed in the management server processing unit 16, and the RAM functions a data memory and the like, which stores data and the like used during the program execution processing in the management server processing unit 16 and is used as an operation area.

The management server processing control unit 16 is a central processing control unit composed of a product database control module 16a, a knowledge database control module 16b, a business management database control module 16c, a function verification database control module 16d, an approval module 16e, an approval factor reference module 16f, a development business control module 16j, a reliability decision module 16k and an approver approval module 161 and the like. The product database control module 16a, the knowledge database control module 16b, the business management database module 16c, and the function verification database control module 16d control the product database 17, the knowledge database 18, the business management database 19 and the function verification database 9, respectively, and process the reference and the update request from the person responsible-for-customer terminal 41, the technical expert terminal 42 and the approver terminal 43.

The approval module 16e is a module performs an approval for the dealings and the development business management recorded in the business management database 19 at timings determined by the company standard model or the business unit standard model. The company standard model and the business standard model will be described later in detail.

The approval factor reference module 16f refers to the function verification database 9, the product database 17, the knowledge database 18 and the business management database 19 in response to the request of the approver terminal 43, and further can request of the IQS decision server 20 to perform the IQS decision. The approval factor reference module 16f includes a P1 gate approval factor reference module 16g, a P2 gate approval factor reference module 16h and a P3 gate approval factor reference module 16i in accordance with a P1 gate to P3 gate, which are determined by the company standard model or the business unit standard model. In the P1 gate, the processing is executed based on the P1 gate approval factor reference module 16g.

The development business control module 16j is a module which monitors the business management database 19 and issues an instruction to the person responsible-for-customer terminal 41, the technical expert terminal 42 and the approval terminal 43 and the like at timings determined by the company standard model or the business unit standard model.

The reliability decision module 16k is a module which request the IQS decision server 20 to execute the IQS decision. To be concrete, the reliability decision module 16k is a module which transmits necessary conditions for the IQS decision to the IQS decision server 20, receives the decision result transmitted by the IQS decision server 20, allows the IQS decision server 20 to refer to the product knowledge database 27 and the product database 17 to execute the IQS decision, receives the result, and transmits the decision result to terminals which request the IQS decision.

The approver approval module 161 is a module which requests the approver terminal 43 to decide whether an approval result obtained by the approval module 16e is approved or not and receives the decision result by the approval terminal 43. Specifically, the approval result is an instruction telling "Procedure May Advance to Next Development Step", "Reexamine Specification", and the like. Furthermore, detailed information offered from the person in charge can be acquired. Furthermore, it is possible to transmit the instruction of the approver as a concrete instruction relating to the development in accordance with the company standard model or the business unit standard model.

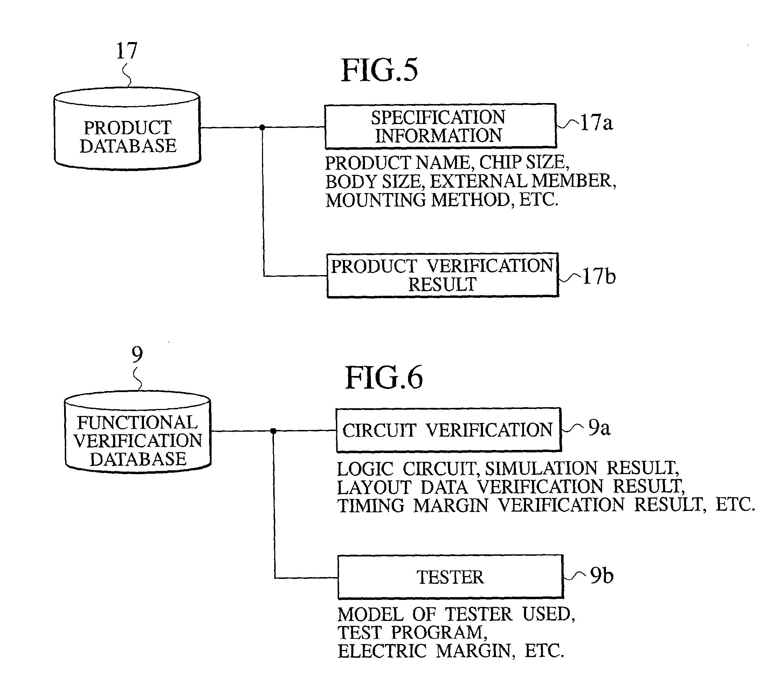

As shown in Fig. 5, the product database 17 is constituted by the following items.
(A) Specification Information 17a: Product Name, Chip Size, Body Size, External Member, Mounting Method and the like
(B) Product Verification Result 17b: Rising-Up Data, Electrical Characteristic, Reliability and the like

In the specification information 17a, the information of the specification determined by business inquiry with the customer is stored. In the product verification result 17b, the result of the verification for the product in each of the respective manufacturing processes is stored.

As shown in Fig. 6, the function verification database 9 is constituted by the following items.
(A) Circuit Verification 9a: Logic Circuit, Simulation Result, Layout Data Verification Result, Timing Margin Verification Result and the like
(B) Tester 9b: Model of Tester used, Test Program, Electrical Margin and the like

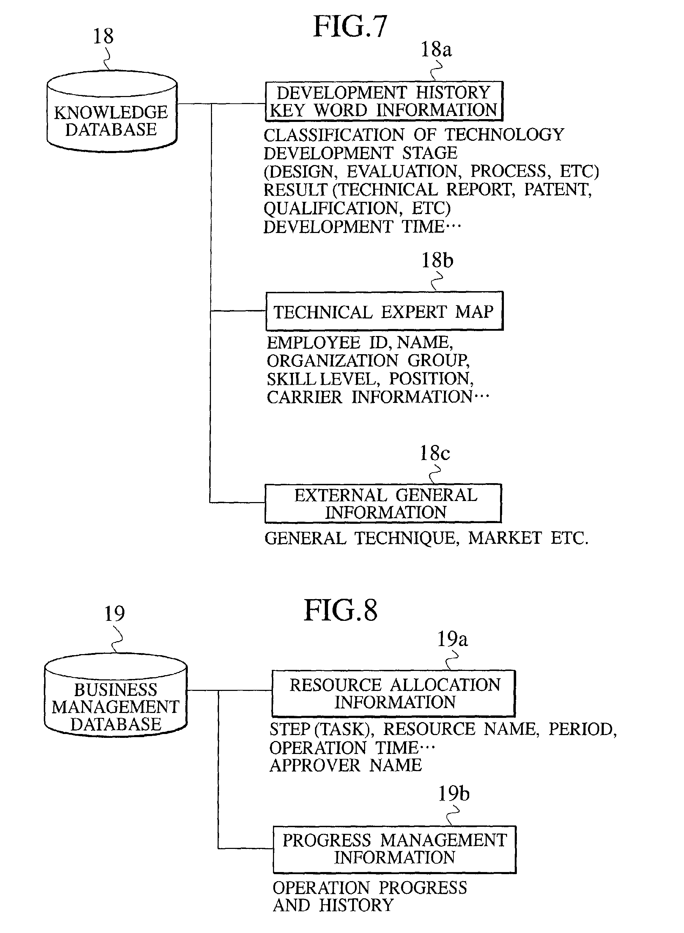

As shown in Fig. 7, the knowledge database 18 is constituted by the following items.
(A) Development History Keyword Information 18a: Classification of Technology Development Stage (e.g., Design, Evaluation, Process), Result (e.g., Technical Report, Patent, Qualification), Development Time and the like.
(B) Technical Expert Map 18b: Employee ID, Name, Organization Group (e.g., Sales Technique, Design, Application Technology, Manufacturing Technology, Factory Technology), Skill Level, Position (e.g., Entrance Date, Official Position, Carrier in present division), Carrier Information (e.g., Occupation for Analog Cell, Occupation for 25 10⁻⁶m Process Development, Occupation for TBGA Package Development, Occupation For ISO Inspector Qualification, Information Processing Qualification). Herein, the skill level is judged according to, for example, an application technology section, a design section, a product technology section and the like. In the application technology section, enumerated are the skill level including "Capability of Evaluation Operation", and "Capability of Preparation of Test Program" and the like. In the design section, enumerated are the skill level including "Capability of Layout", and "Capability of Simulation" and the like. In the product technology section, enumerated are the skill level including "Capability of Defective Analysis", and "Capability of Business Enterprise and Line Planning" and the like.
(C) External General Information 18c: General Technique, Market Information and the like.

As shown in Fig. 8, the business management database 19 is constituted by the following items.
(A) Resource Allocation Information 19a: Step (Task), Resource Name, Period, Operation Time, and Approver Name and the like. Information of the Whole Resource Relating to the Product
(B) Progress Management Information 19b: Operation Progress. When, Who Which Operation Is Executed?

Data structure of the product database 17, the verification function database 9, the knowledge database 18 and the business management database 19, which are shown in Figs. 5 to 8, may be stored in a storage medium from which a computer is capable of reading out the data. This storage medium is read in by a computer system to be stored in the temporary storage unit 15. This data structure may be executed by the management server processing control unit 16. Herein, the storage medium includes for example, a medium capable of recording a program such as a magnetic disc, an optical disc, a magneto-optical disc and a magnetic tape. An external memory unit of a computer is included in the recording medium which is described herein.

### (Company Standard Model)

Regarding the definition of an approver in an organization, the timing and the frequency of judgment, the items that are a judgment object, a judgment method, a full specification model is defined as the company standard model (common rule in manufacturing enterprise). In addition, the management model of the product development is classified into the product development and the factor technology development and modeled. The factor technology is further classified, and the current information can be uniformly obtained under circumstances decided based on the ownership of the specialized organization.

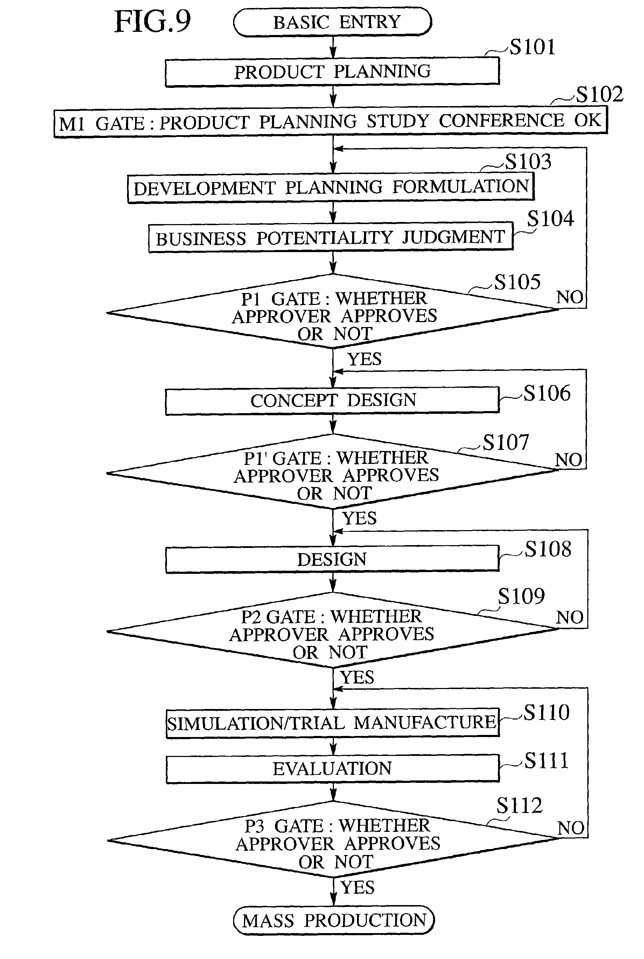

Fig. 9 is an example of the company standard model.
(A) First, in step S101, product planning is performed.
(B) Next, in step S102, a product planning study conference is performed (M1 gate). Herein, the product planning is determined.
(C) In step S103, the formulation of the development planning is performed. To be concrete, the specification confirmation and the planning study concerning a design, pre-steps, after-steps and a manufacturing line are performed. Herein, the specification of the product is provisionally determined. Next, in step S104, a business potentiality judgment is performed. Herein, a cost estimation is performed, and the judgment of the business potentiality is performed in combination with the market information to consideration.
(D) Based in the result obtained in steps S103 and S104, in step S105, the approver performs the judgment of the development (P1 gate). When the approval is not obtained, the development planning formulation in step S103 and the business potentiality judgment in step S104 are performed again. When the approval is obtained, the procedure advances to step S106.
(E) In step S106, a concept design is performed. In the concept design, the specification determined in the business inquiry with the customer is fixed for an in-company specification. Herein, the specification of the product is settled.
(F) Based on the result obtained in step S106, in step S107, the approver performs a qualification grade judgment (P1' gate). When the approval cannot be obtained, the concept design of step S106 is performed again. When the approval is obtained, the procedure advances to step S108.
(G) In step S108, the design is performed. The process simulation and the device simulation are performed additionally if necessary. Herein, the design is executed, and the verification of the design result is performed. In addition, the development planning and the business potentiality are further reexamined.
(H) Based on the result obtained in step S108, in step S109, the approver performs a mask preparation judgment (P2 gate). When the approval is not obtained, the design is performed in step S108 again. When the approval is obtained, the procedure advances to step S110.
(I) In step S110, the detailed simulation and the trial manufacturing based on the detailed simulation are performed. Moreover, as to the result obtained by the trial manufacturing in step S110, the evaluation such as the product verification and the characteristic evaluation is performed in step S111. Moreover, based on the evaluation result, the preparation of the manufacturing line and the reexamination of the business potentiality are performed.
(J) Based on the evaluation obtained in step S111, the approver performs the mass production judgment in step S112. When the approval is not obtained, the simulation and the trial manufacturing in step S110 and the evaluation in step S111 are again performed. When the approval is obtained, the procedure enters the mass production system.

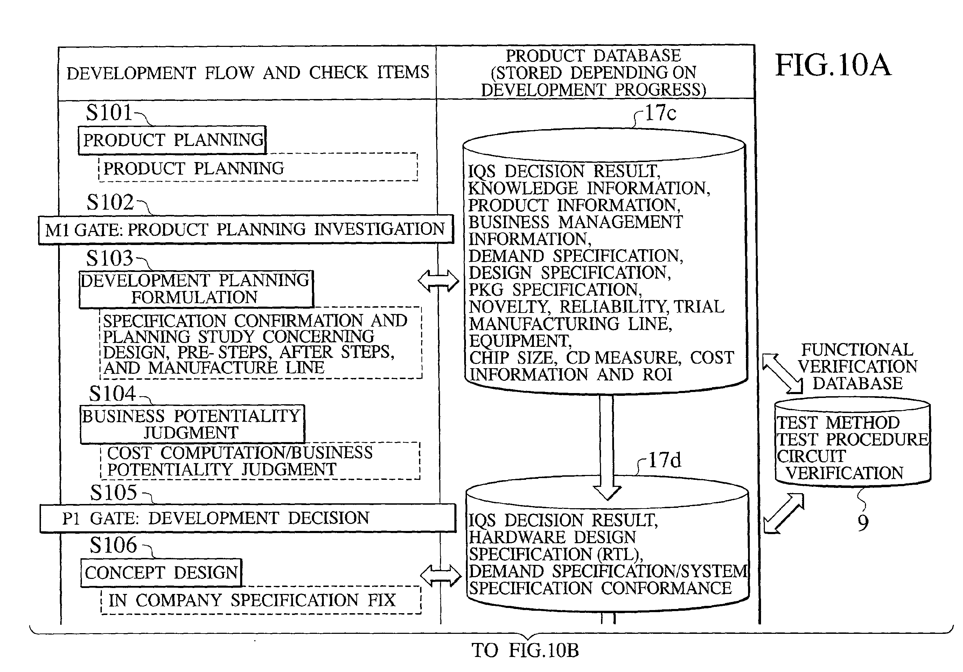

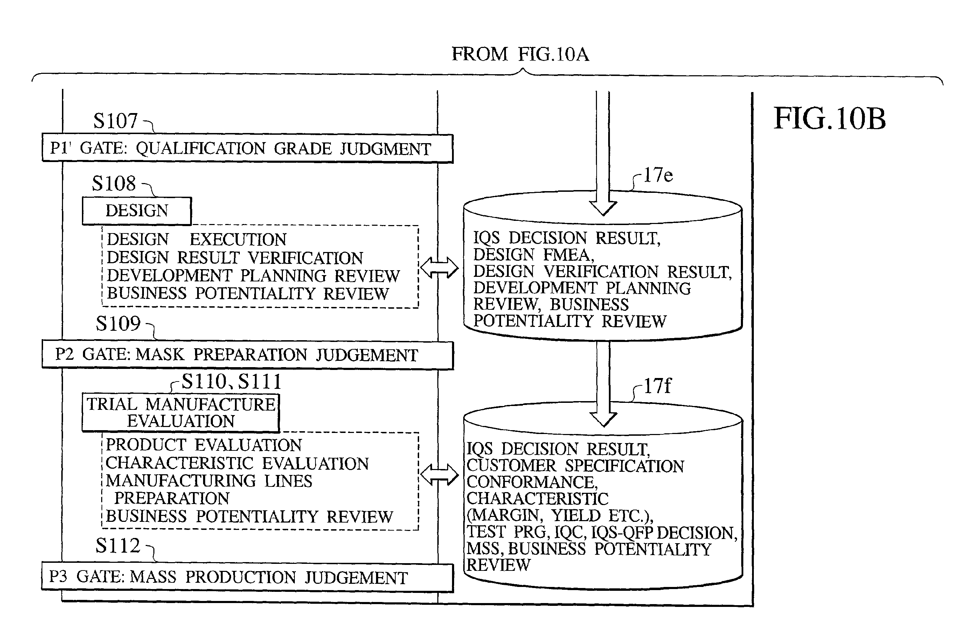

Figs. 10A and 10B are diagrams illustrating data items registered with the product database 17 and the function verification database 9 in each step of the flowchart of the company standard model.
(A) In the development planning formulation step of step S103 and the business potentiality judgment step of step S104, information is registered with the product database 17c, which includes the IQS decision result, the knowledge information, the product information, the business management information, the demand specification, the design specification, the package specification, the novelty, the reliability, the resources, the trial manufacturing line, the equipment, the chip size, a CD (Cost Down) measure, cost information, ROI (Return on Investment) and the like. Moreover, based on a specification determined herein, a test specification concerning the test method, a test procedure, circuit verification method and the like is prepared, in accordance with an the desired accuracy of the product, and registered with the function verification database 9.
(B) In the concept design step of step S106, information is registered with the product database 17d, which includes the IQS decision result, a hardware design specification (RTL (Register Transfer Level)), the demand specification/system specification conformance and the like. Herein, the function verification database 9 is updated as to the determined specification.
(C) In the design step of step S108, information is registered with the product database 17e, which includes the IQS decision result, a design FMEA (Failure Mode & Effects Analysis), the design verification result, the development planning review, the business potentiality review and the like.
(D) In the sample trial manufacturing processes of step S110 and the evaluation step of step S111, information is registered with the product database 17f, which includes the IQS decision result, customer specification conformance, the characteristic (margin, yield and the like), the test program, an IQC (Reliability Decision Of Function Block Included In the Product), an IQC-QFP decision, MSS (electrical characteristic specification for factory transfer) the business potentiality review and the like. Herein, the QFP (Qualification For the Product) means the product qualification in the IQS decision.

As described above, the verification data is registered with the function verification database 9, and the review is performed.

Furthermore, data shown in the product databases 17c to 17f are stored in the product database 17 depending on the business progress. These data are respectively stored separately in such a manner that the data before the manufacturing is stored in the specification information 17a and the verification result of the completed product is stored in the product verification result 17b. Furthermore, the result obtained by the IQS decision is registered with the product databases 17c to 17f. The IQS decision registered with the product databases 17c to 17f is results obtained by the reliability decision while supposing the product after completion based on the input of the data which is determined or provisionally determined for each gate in accordance with the manufacturing processes. Specifically, as the development flow approaches more closely to the finish, the determined input data becomes much. Accordingly, as the development flow approaches more closely to the finish, the reliability of the IQS decision result becomes higher.

### (Approver Approval Method by Approver Approval Module)

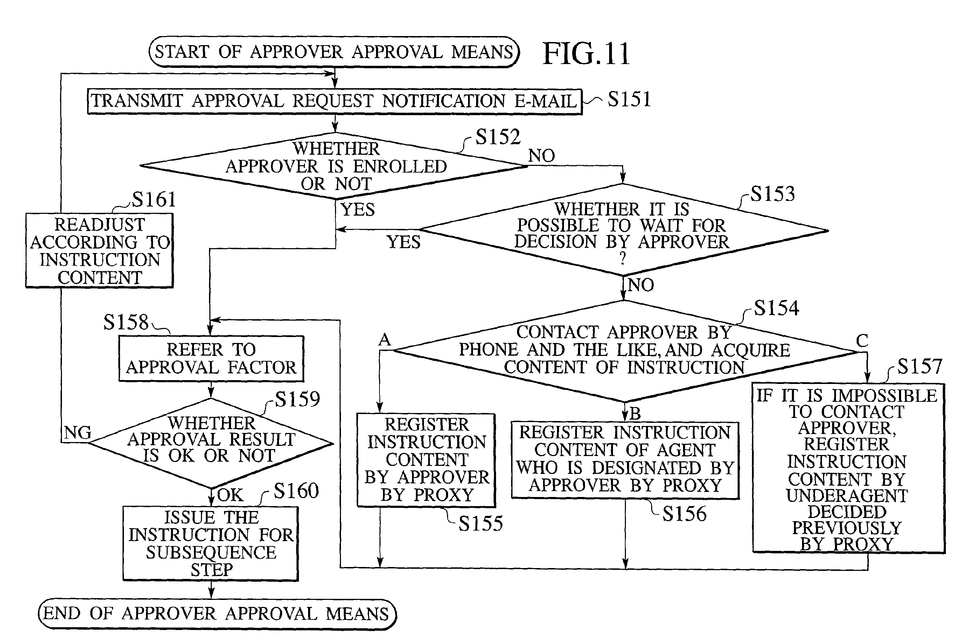

An approval module and an approval method of the company standard model will be described by use of Fig. 11.

Fig. 11 is a flowchart in the approver approval module 161.
(A) When the approval of the approver becomes necessary, an approval request notification is first transmitted to the approver in step S151.
(B) In step S152, when the approver is not enrolled or when a reply mail is not sent from the approver after passage of a predetermined time, it is inquired in step S153 whether the decision from the approval can be waited. When it is possible to wait the decision by the approver, the decision by the approver is waited. If it is impossible to wait for the decision from the approver, contacted the approver by the phone or the like, and the content of an instruction by the approver is acquired in step S154.
(C) In accordance with the instruction content acquired in step S154, any of the following processings is performed. The instruction content from the approver is registered by proxy in the in step S155. The instruction content of an agent designated by the approver is registered by proxy in step S156. When it is impossible to contact the approver, the instruction content of an underagent previously determined is registered by proxy in step S157.
(D) In step S158, the approver refers to factors necessary for the approval by the approval factor reference module 16f. In step S159, the approver decides whether the approval is permitted or not. When the approval is permitted, the approver issues the instruction for the operations in the subsequent step in step S160. When the approval is not permitted, the approver issues an instruction in step S161, and performs a readjustment. Then, the approver performs the approval operation again.

### (Approval Factor Reference Method by Approval Factor Reference Module)

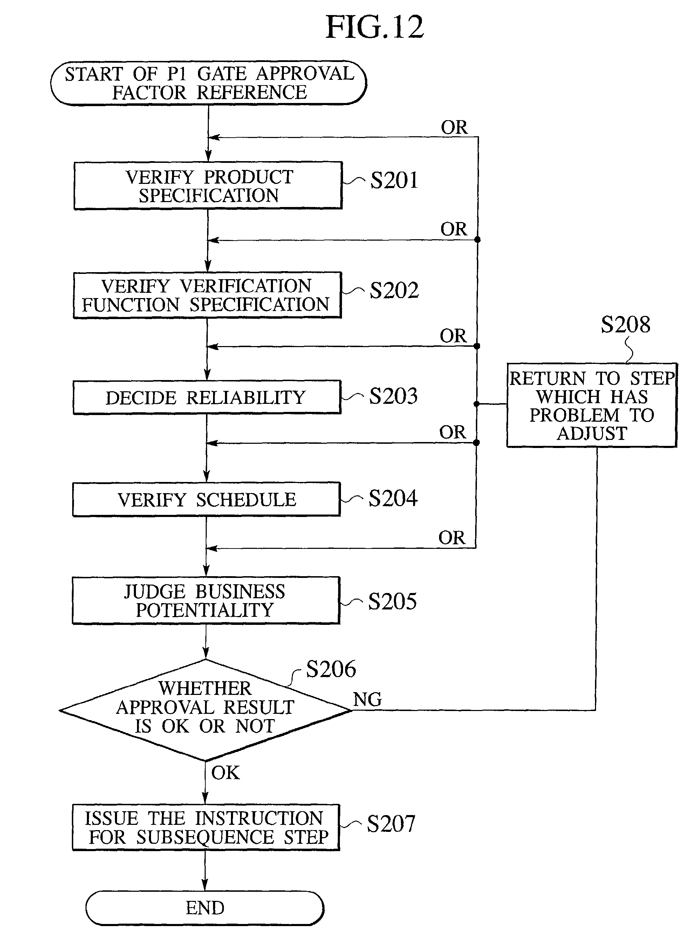

Next, an approval factor reference method by an approval factor reference module will be described by use of Figs. 12 to 14.

Figs. 12 to 14 are flowcharts by the approval factor reference module 16f.

Fig. 12 is a flowchart illustrating processings of the P1 gate approval factor reference module 16g.
(A) In the P1 gate, in step S201, the specification information 17a of the product database 17 is referred to, and the product specification is verified. Moreover, in step S202, the function verification database 9 is referred to, and the method of the function verification designed based on the specification information 17a and the delivery date is verified with reference to the function verification database 9.
(B) Furthermore, in step S203, the reliability of the product manufactured by the present specification is judged by the reliability decision module 16k in step S203.
(C) Furthermore, in step S204, the verification of the schedule is performed with reference to the business management database 19. Herein, the verification judgement from the aspect such as man, a line and a commodity is performed.
(D) Moreover, the in step S205, the knowledge database 10 and the like are referred to, and the business potentiality is judged.
(E) In step S206, the synthetic judgment as the P1 gate is performed based on the results of the verification and the decision which were performed in steps S201 to S205. When it is decided that the approval is permitted, an instruction to move the procedure of the design step is given in step S207. In addition, when the approval is not permitted, an instruction for review is issued in step S208. In step S208, the procedure returns to any of steps S201 to S205 which have problems.

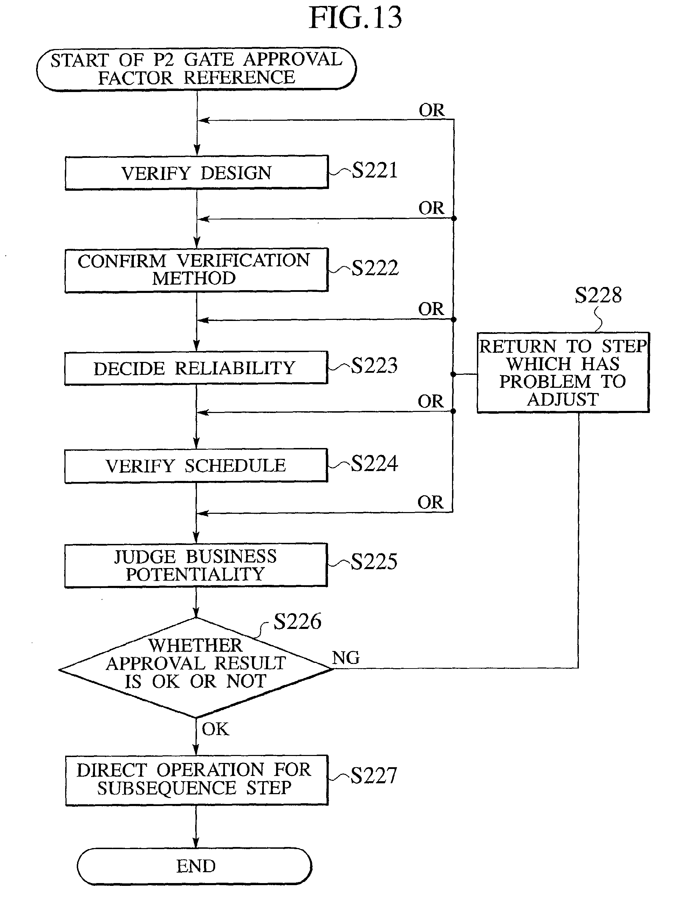

Fig. 13 is a flowchart illustrating the processings of the P2 gate approval factor reference module 16h.
(A) In the P2 gate, the product database 17 is referred to in step S221, and the verification of the design is performed. Moreover, in step S222, the function verification database 9 is referred to, and it is confirmed whether the designed product was designed according to the test specification. Moreover, it is confirmed whether the verification method is correct.
(B) Furthermore, in step S223, the reliability of the product manufactured by the present specification is judged based on the design performed by the reliability decision module 16k until the present step.
(C) In step S224, the business management database 19 is referred to, and the verification of the schedule is performed. Herein, the verification judgment from the aspect such as man, a line and a commodity is performed.
(D) In step S225, the knowledge database 18 and the like are referred to, and the business potentiality is judged.
(E) In step S226, the synthetic judgment as the P2 gate is performed based on the results of the verification and the decision which were performed in steps S221 to S225. When it is decided that the approval is permitted, an instruction to move the procedure to the simulation and trial manufacturing process is given in step S227. In addition, when it is decided that the approval is not permitted, an instruction for review is issued in step S228. In step S228, the procedure returns to any of steps S221 to S225 which have problems.

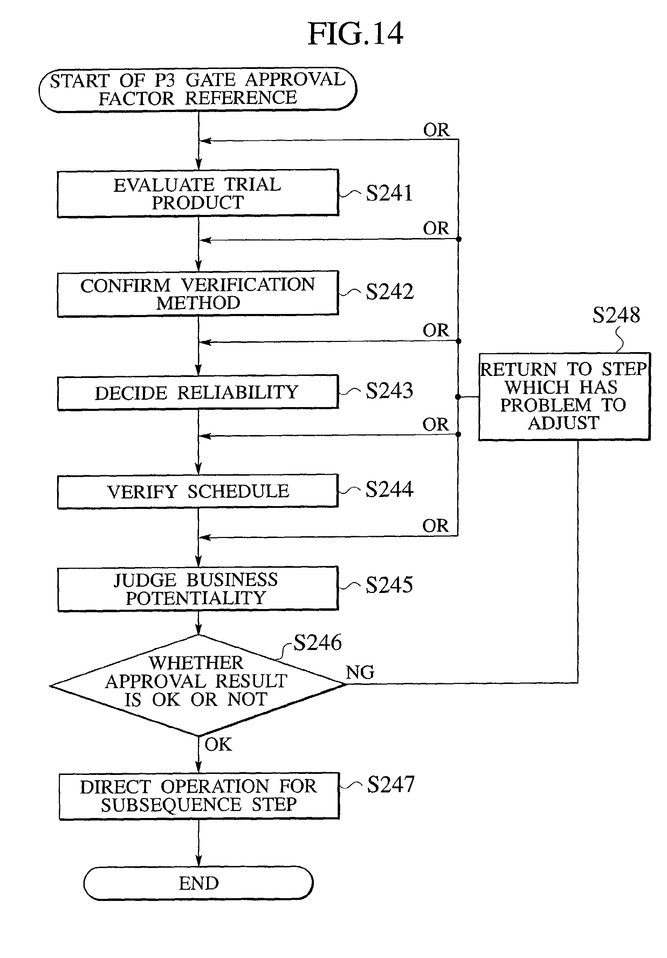

Fig. 14 is a flowchart illustrating the processings of the P3 gate approval factor reference module 16i.
(A) In the P3 gate, the trial product is first evaluated with reference to the product database 17 in step S241. Moreover, in step S242, the function verification database 9 is referred to, and it is confirmed whether the trial product was prepared according to the test specification. Moreover, it is confirmed whether the verification method is correct.
(B) Furthermore, in step S244, the reliability of the products is judged by the reliability decision module 16k, which are obtained by mass-manufacturing the trial product, which is by the mass production by the present step.
(C) In step S245, the business potentiality is judged with reference to the knowledge database 18 and the like.
(D) In step S246, the synthetic judgment as the P3 gate is performed based on the results of the verification and the decision which were performed in steps S241 to S245. When it is decided that the approval is permitted, an instruction to move the procedure to the mass production is issued to the factory in step S247. In addition, when it is decided that the approval is not permitted, an instruction for review is issued in step S248. In step S248, the procedure returns to any of steps S241 to S245 which have problems.

The order of the processing contents of the company standard model is determined by more optimizing the business unit standard model in accordance the characteristic of the developed product that is an object. Moreover, the company standard model itself is brushed up by an appropriate procedure in accordance with the change of the market and the advance of the technology and the like.

### (Business Unit Standard Model)

The decision model is defined for each business section of the organization while subtracting unnecessary decision contents for each characteristic of the product group to be developed. After the approval is given to a reasonable section, the decision model is defined as the business unit standard model (the common rule in the product section).

The business unit standard model is obtained by allowing the company standard to correspond to the feature of the product.

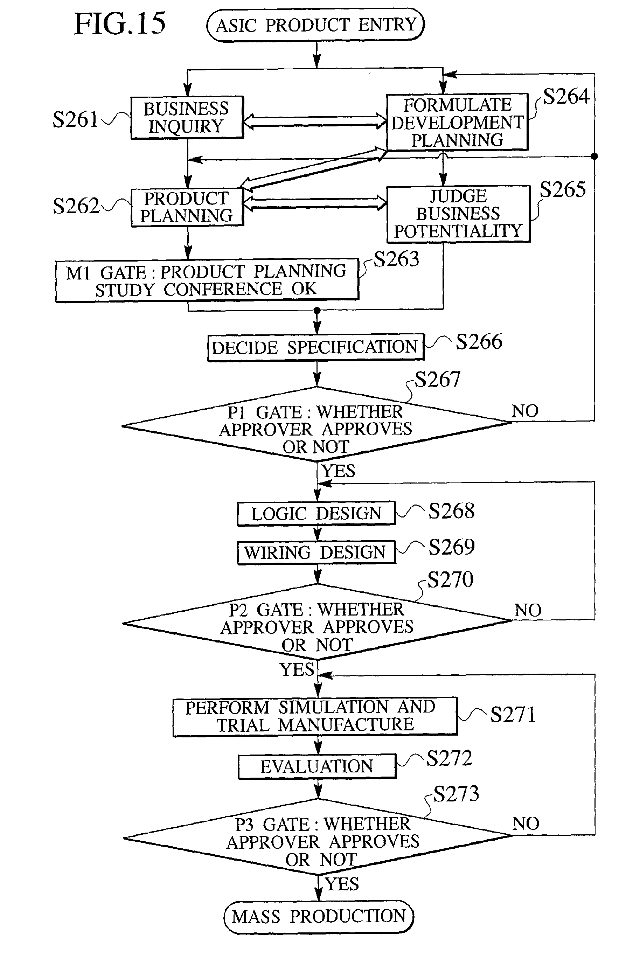

An example of the business unit standard model in which the company standard model is applied to the semiconductor products is illustrated by use of Figs. 15 to 18.

Fig. 15 is an example of the business unit standard model in the case where the product is an ASIC (Application Specific Integrated Circuit). Since the ASIC is a custom product for each of which the customer determines a specification, the judgment of the order entry is a key.
(A) First, in step S261, the business inquiry with the customer is performed. In step S262, the product planning for the ASIC product is performed. Moreover, in step S263, the negotiation is carried out in the merchandize planning conference, and the specification is investigated.
(B) On the other hand, in step S264, the development planning is formulated in the manufacturing enterprise, and the judgment of the business potentiality is performed in step S265. These steps S261 to S265 are judged with interference with each other.
(C) Next, the specification is determined in step S266. In step S267, based on this specification, the approver decides whether the next logical design is to be executed, and makes the approval. When the approval is not permitted, a review is performed in the merchandize planning in step S262 and in the development planning formulation in step S264.
(D) When the approval is permitted in step S267, the logical design is performed in step S268, and the wiring design is performed in step S269.
(E) Based on the design performed in steps S268 and S269, the approver decides whether a next simulation and trial manufacture are to be performed. When the approval is not permitted, a review is performed in the logical design in step S268 and in the wiring design in step S269.
(F) When the approval is permitted in step S270, the simulation and the trial manufacture are performed in step S271, and the evaluation concerning the simulation and the trial manufacture is performed in step S272.
(G) Based on the evaluation performed in step S272, the approver decides in step S273 whether the mass production it to be performed or not. When the approval is not permitted, the review of the simulation and the trial manufacture is performed in step S271. When the approval is permitted, an instruction of the mass production is issued to the factory.

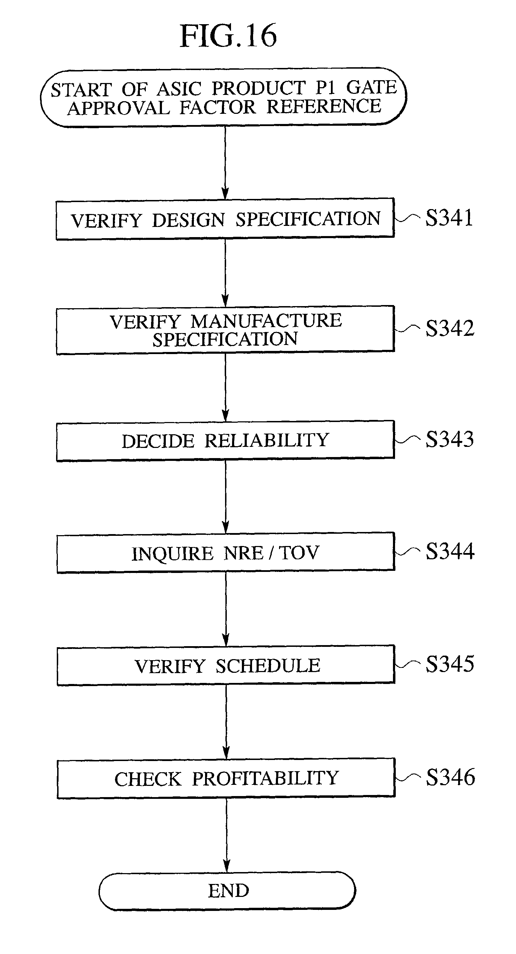

Fig. 16 is a flowchart of the P1 gate approval factor reference module 16g in step S267 of Fig. 15.
(A) First, in step S341, the specification of the design is verified with reference to the specification information 17a of the product database 17. Moreover, in step S342, the manufacture specification of the ASIC product is verified with reference to the function verification database 9.
(B) Moreover, in step S343, the reliability of the ASIC product manufactured according to the present specification is decided by the reliability decision module 16k.
(C) Moreover, in step S344, NRE (Non-Recurring Express), which is a development fee paid for the ASIC vendor, and TOV (Turn Out of Value), which is a manufacturing cost, are inquired.
(D) Moreover, in Step S345, schedule verification is performed with reference to the business management database 19.
(E) Moreover, in step S346, checking of profitability is performed with reference to the knowledge database 18 and the like.

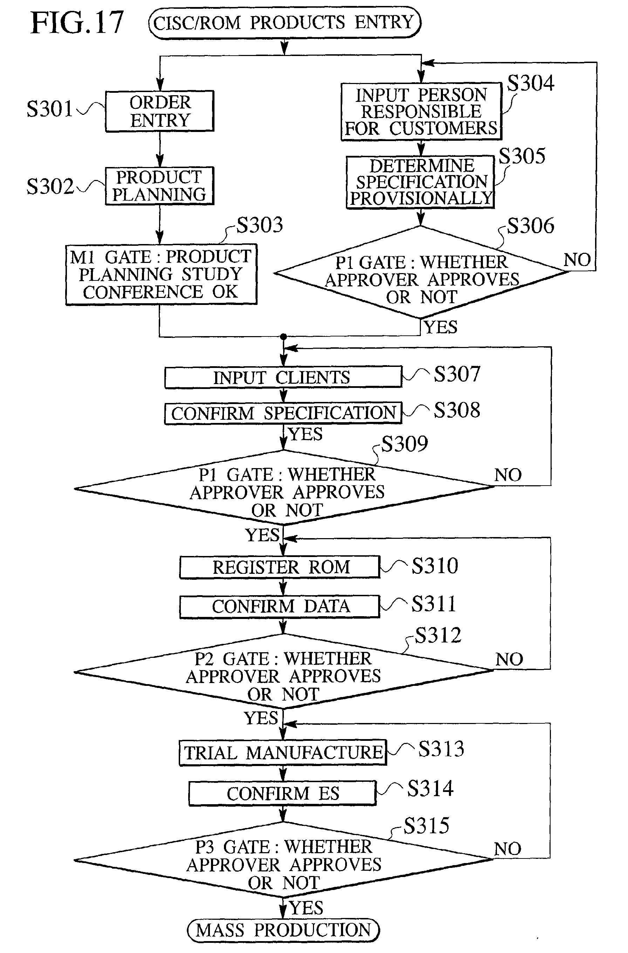

Fig. 17 is an example of the business unit standard model in the case where the product is CISCROM (Complex Instruction Set Computer Read Only Memory). The procedures shown in Fig. 17 has a feature in that steps S301 to S303 and S304 and S306 are in parallel performed in a short time as to a product which realizes a specification desired by customers by combinations of existing ROM circuits.
(A) First, in step S301, the business inquiry with the customer is performed. The product planning for the CISC or ROM product is performed in step S302. In step S303, the negotiation is carried out in the merchandize planning conference, and the specification is investigated.
(B) On the other hand, in step S304, the person responsible for customer inputs information obtained in the business inquiry with the customer, and the specification is provisionally determined in step S305. In step S306, the approver decides whether the specification provisionally determined in step S305 is approved or not. When the specification is not approved, the procedure returns to step S304, and the specification is examined. Then, the person responsible for customers inputs a new specification.
(C) Next, in step S307, the customer inputs detailed information concerning usage conditions such as the desired delivery date and the usage field, and the final specification is determined in step S308.
(D) In step S309, the approver decides whether the specification determined in Step S308 is approved or not. When the specification is not approved, the customer again inputs detailed information concerning usage conditions such as the desired delivery date and the usage field in step S307.
(E) In step S309, when the approver approves the specification, ROM is registered in step S310, and Data is confirmed in step S311.
(F) The approver decides in step S312 whether Data confirmed in step S311 is approved. When the specification is not approved, the ROM is registered again in step S310.
(G) When the approver approves the specification in step S312, the function evaluation is, in step S313, performed for ES (Engineer Sample) prepared by a trial manufacture, which is a sample for a function confirmation.
(H) Upon receipt of the ES function evaluation result in step S314, the approver decides in step S315 whether the ES is approved. When the ES is not approved, the procedure returns to step S313, and the trial manufacture is performed again. When the approver approves the ES, an instruction of the mass production is issued to the factory.

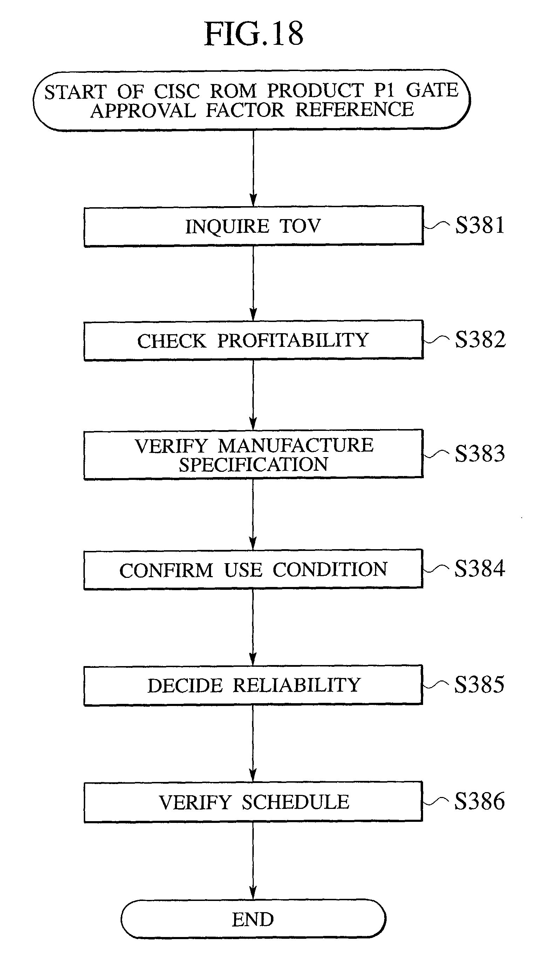

Fig. 18 is a flowchart of the P1 gate approval factor reference module 16g in step S 306 of Fig. 17.
(A) First, in step S381, the inquiry for TOV is performed, and checking of profitability is performed in step S382.
(B) Moreover, the specification information 17a of the product database 17 is referred to. The verification of the product specification is performed in step S383, and the confirmation of the usage conditions is performed in step S384.
(C) Moreover, in step S385, the reliability of the CISC or ROM product manufactured by the present specification is decided by the reliability decision module 16k.
(D) Moveover, in step S386, the verification of the schedule is performed with reference to the business management database 19.

According to the first embodiment of the present invention, a full-spec model is defined as the company standard model (the common rule in the manufacturing enterprise) as to the definition of the approver in the organization, the decision timing and frequency, the items to be judged, and the judgment method. In addition, the management model of the product development is classified into the product development and the factor technology development, and the factor technology is further classified. The newest information can be uniformly obtained under environments determined based on the ownership of each specialized organization.

Moreover, the decision model is defined for each business section of the organization while subtracting unnecessary decision contents for each characteristic of the product group to be developed. After the approval is given to a reasonable section, the decision model is defined as the business unit standard model (the common rule in the product section) . A common platform covering all of the product development businesses and factor technology businesses is mounted, which includes the organization, the operation, the definition of the product development flow, various tools on the computer, and the IT system defining the relation of various common databases and the arrangement.

Furthermore, the review is performed as to the factors including the market change, the technology trend, the corporate strategy, the global standard transition, the problem occurrence/solution knowledge, and the resource management technique and the like. The real time improvement and the execution are performed. Moreover, the approver is defined, who monitors the total manufacturing processes of each product from the start of the development to the finish with responsibility while taking a broad view of things. The most suitable report and the support for decision are given to the approver.

According to the first embodiment of the present invention, the product development management system and the product development management method can be provided, which manage all bits of the factor information necessary for the plural decisions on the database, perform the optimum and fastest decision by use of the database in which the newest information is stored, and can provide information with a certain quality.

Furthermore, all bits of the factor information necessary for the plural decisions are unitary managed on the database, and the optimum report and decision request are performed depending on the system, whereby it is possible to perform the optimum and fastest decision.

The rule relating to the provision of the information of the constant specification and the method thereof is defined for each organization dispersing for the business activity, and made use of by the product development management system, whereby the provision of the newest information with a certain quality can be secured.

Based on the product development model, the factor technology information necessary for the decision is collected from each specialized organization at a stage of starting the development based on the product development model, and shared by a person responsible for each manufacturing process. Therefore, it is possible to formulate an exact development planning such as a problem occurrence forecast in the future, which includes the factor technology development schedule.

Furthermore, by setting the approver managing with a responsibility during all of the development steps, it is possible to perform the product development situation observation such as the arrangement of the problem occurrence forecast, the resource management and the factor technology development schedule while taking a broad view of things. It is also possible to perform the most suitable report for the approver and the decision support.

Furthermore, by providing information useful for the decision, which relates to a responsible person, to the approver effectively and securely, the information including, for example, newest business information such as sensitive current business information such as customer sense, real time technology development situations, and a trend of law revisions, it is possible to perform the optimum and fastest decision.

The motivation and owner consciousness at each specialized organization are enhanced by the classified information and decision model, and a suitable delegation of power is performed. At the same time, the proposal and decision and the like of the responsible person is collected and provided as important information. Thus, a quality of the decision is enhanced.

Initial items of the last time of the whole enterprise and all resources are unitary managed, and the order of priority as enterprises for the development is decided, whereby the optimum and fastest decision can be performed.

The customer can judge that the uniform performance is assured in terms of supplied service, product quality and validity of cost, speed, and the like, therefore a sufficient reliability is obtained.

### (Second Embodiment)

### (IQS Decision Server)

An embodiment of a product reliability decision system according to a second embodiment of the present invention will be described.

An IQS decision is performed in the following manner. The product after manufacturing is assumed for each manufacturing process by referring to a product database 17 and a product knowledge database 27, and it is decided whether the product satisfies predetermined conditions or not.

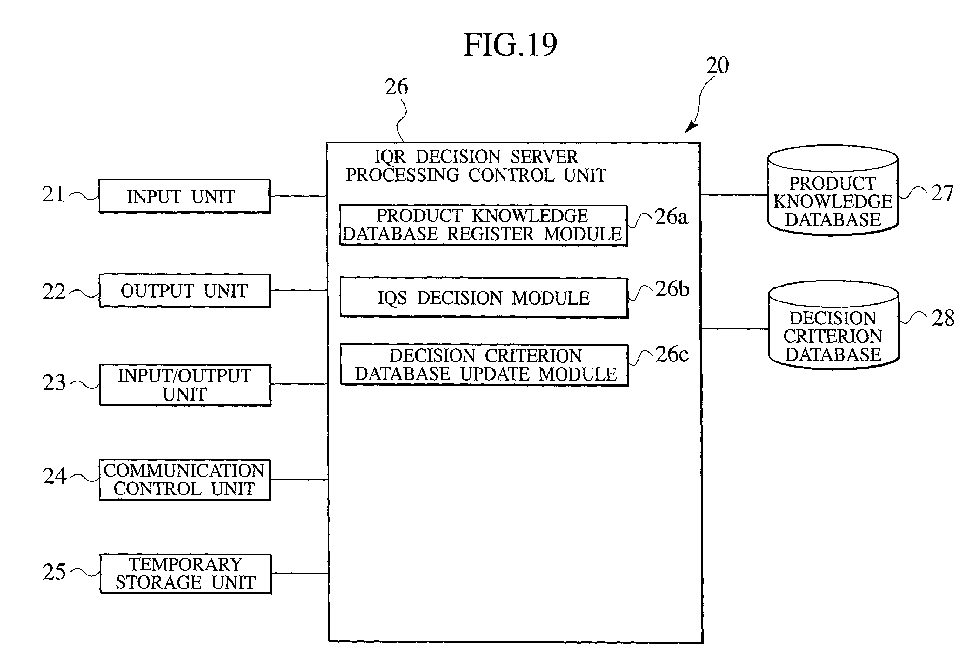

Fig. 19 is a function block diagram illustrating the details of an IQS decision server 20 in the product reliability decision system according to the second embodiment of the present invention. The IQS decision server 20 shown in Fig. 19 is identical to the IQS decision server 20 in Fig. 1.

The IQS decision server 20 is constituted by an input unit 21, an output unit 22, an input/output unit 23, a communication control unit 24, a temporary storage unit 25, an IQS decision server processing control unit 26, a product knowledge database 27 and a decision criterion database 28.

The input unit 21 is constituted by a keyboard, a mouse and the like. The output unit 22 is constituted by a display device such as a liquid display and a CRT display, and a printing apparatus such as an ink-jet printer and a laser printer, and the like. The input/output unit 23 is an interface with an external device, and the external device is a storage device such as a CD-ROM, a MO, a ZIP, and the like. The communication control unit 24 serves as an interface for coupling to the in-company LAN. A ROM and a RAM are installed in the temporary storage unit 25. The ROM functions as a program memory and the like storing a program executed in the management server processing unit 26, and the RAM functions as a data memory and the like, which stores data and the like used during the program execution processing and is used as an operation area in the management server processing unit 26.

The product knowledge database 27 is a database in which existing technology information is stored, and the decision criterion database 28 is a database which stores a decision criterion for reliability.

The IQS decision server processing control unit 26 is a central processing control unit composed of a product knowledge database register module 26a, an IQS decision module 26b and a decision criterion database update module 26c and the like.

The knowledge decision database register module 26a is a module for accepting registers of the past record, the specification and the usage conditions and the like of the manufactured products to the product knowledge database 27. Note that the past record, the specification and the usage conditions of the manufactured products are qualified. The IQS decision module 26b is a module which refers to the product knowledge database 27, the product database 17 and the decision criterion database 28 and makes the IQS decision when the IQS decision is requested from a person responsible-for-customer terminal 41, a technical expert terminal 42 and an approval terminal 43. The IQS decision module 26b refers to a product verification result 17b of the product database 17 as to the characteristic confirmed in the already manufactured step, and then forecasts the characteristic based on the specification of the product to be manufactured in the manufacturing process, thus deciding the reliability of the product to be finally manufactured. The decision criterion database update module 26c is a module for updating the criterion of the decision recorded in the decision criterion database 28.

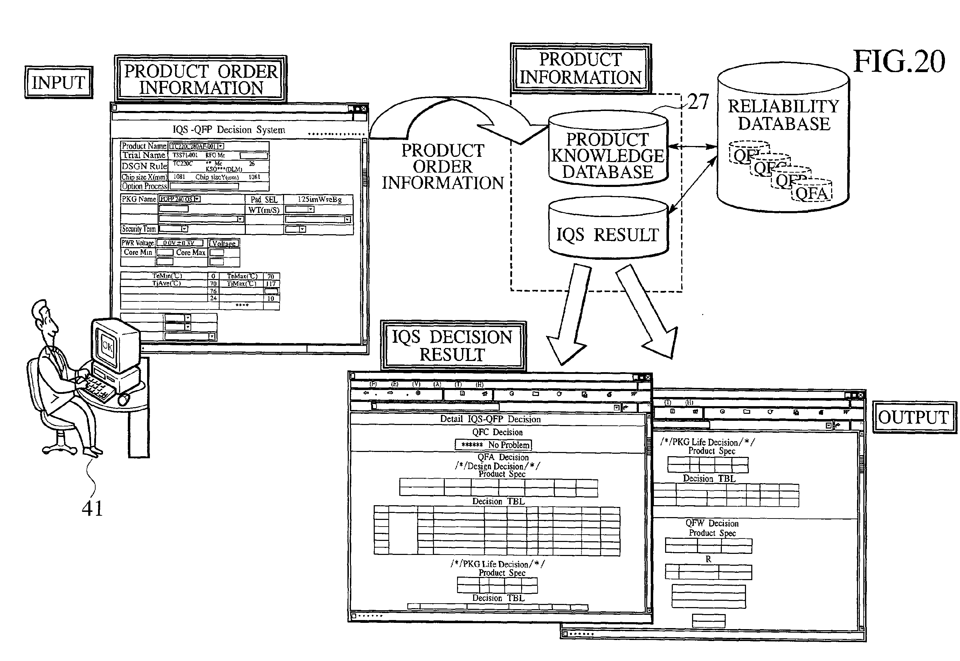

Fig. 20 is a schematic view of a concrete input/output and decision method of the IQS decision server 20. For example, when product order entry information is input from the person responsible-for-customer terminal 41 to the IQS decision server 20, the IQS decision server 20 refers to the product knowledge database 27, and acquires an IQS result. This IQS result is output to the person responsible-for-customer terminal 41 as an IQS decision result. At this time, the final IQS decision result and the detailed decision result are displayed.

### (Technology Qualification and Factor Technology Qualification of Semiconductor Product)

Herein, as an example of the manufacturing product, semiconductor products will be described. The achievement, the specification and the usage condition of the manufactured products and the like, which are qualified, are registered with the product knowledge database 27 from the technical expert terminal 42 and the like.

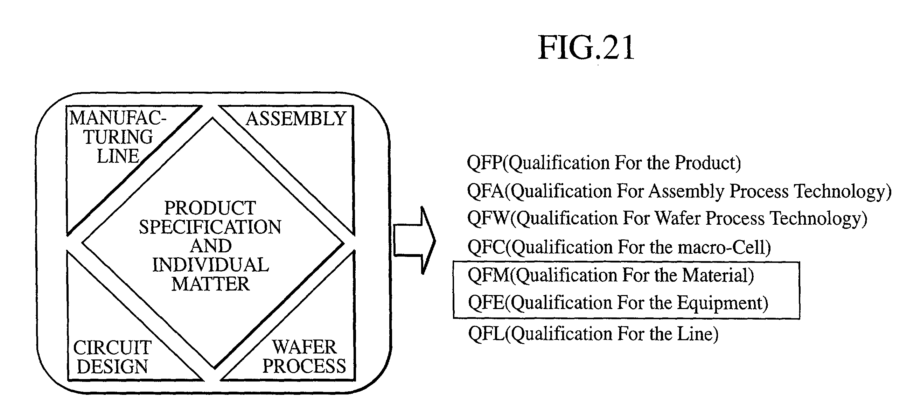

Fig. 21 is a drawing for explaining the reliability decision and the factor technology which are performed for each reliability manufacturing process of the semiconductor product. The reliability of the semiconductor product is evaluated by the individual items such as the product specification, the technology of the manufacturing process of the wafer process, the manufacturing line, the circuit design the package and the like.

Specifically, the technology qualification of the semiconductor product is constituted by QFA (assembly technology qualification: Qualification For Assembly Process Technology), QFW (wafer process technology qualification: Qualification For Wafer Process Technology) and QFC (circuit design qualification: Qualification For the macro-Cell). The QFA qualifies the technology of the assembly process; the QFW, the technology of the wafer process; and the QFC, the technology of the circuit design process.

On the other hand, the qualification of the manufacturing line is QFL (Qualification For the Line) . In addition, the factor technology may be constituted by QFM (Qualification For the Material) and QFE (Qualification For the Equipment). QFA and QFW may be qualified after QFM and QFE are qualified.

When QFA, QFW, QFC and QFL are qualified, QFP (Qualification For the Product) can be obtained. The technology qualified in the above described manner is registered with each database, with which data of an essential technology and factor technology is registered, by the product knowledge database register module 26a.

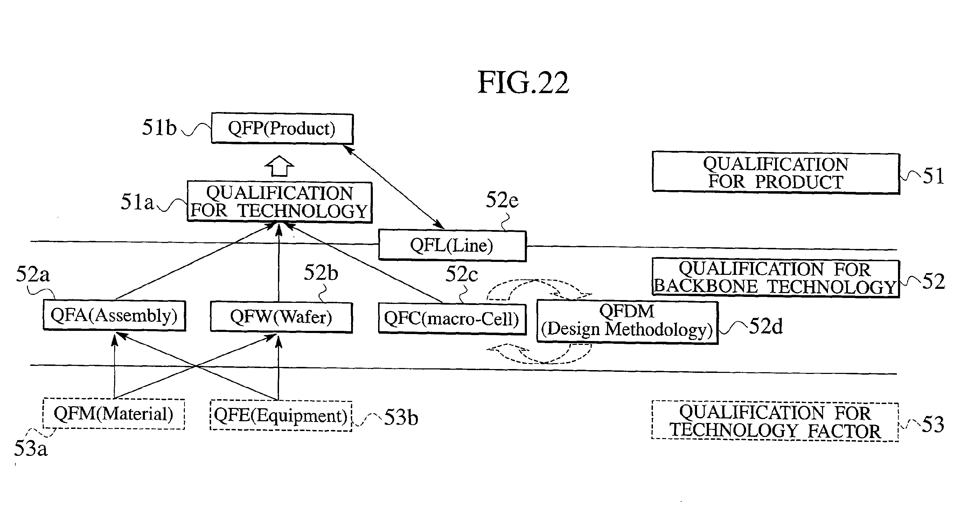

As shown in Fig. 22, the product qualification is constituted by a product qualification 51 of the first layer, the essential technology qualification of the second layer and the factor technology of the third layer. The factor technology qualification 53 is constituted by QFM 53a and QFE 53b. After these are qualified, the qua¥lification of QFA 52a and QFW 52b for the essential technology qualification is performed. Alternatively, on the assumption that these are qualified, QFA 52a and QFW 52b of the essential technology qualification may be qualified.

In addition, QFC has a correlation with QFDM (Qualification For Design Methodology). When QFA 52a, QFW 52b and QFC 52c are qualified of the essential technology qualification are qualified, the technology qualification 51a in the product qualification 51 is performed. It is possible to acquire QFP 51b by referring to the technology qualification 51a and QFL 52e.

Herein, the product qualification having the first to third layers was described. The qualification items of the third layer is further segmentalized, and the third and fifth layer may be superposed thereon. Note that the qualification item of a lower layer is qualified and then a qualification item of a layer directly on this layer may be qualified. In addition, the product qualification of the semiconductor product was described. As a matter of course, the same method can be applied to other products.

### (Product Knowledge Database)

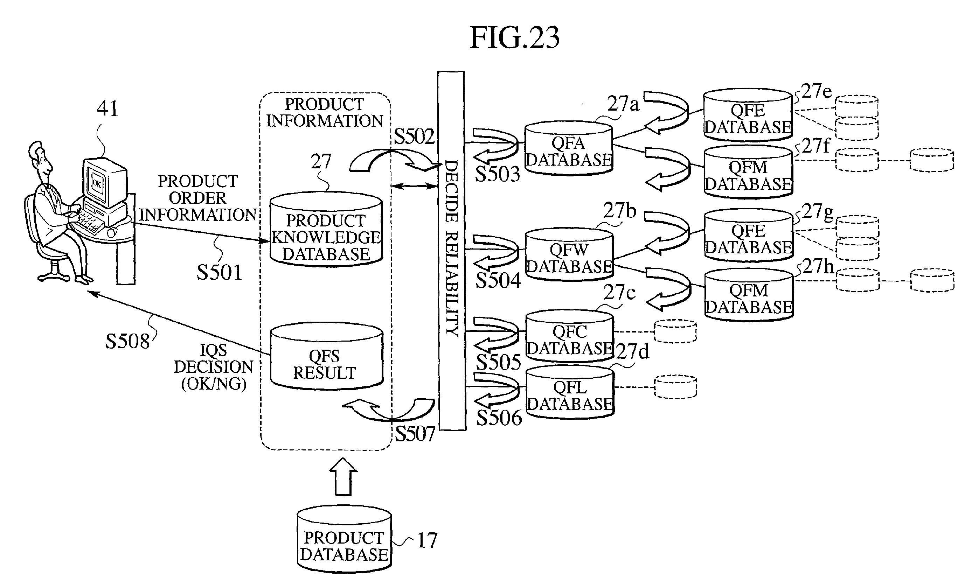

As shown in Fig. 23, reliability knowledge as to the manufacturing process, the manufacturing equipment, and part member is stored in the product knowledge database 27. The product knowledge database 27 is constituted by a QFA database 27a, a QFW database 27b, a QFC database 27c, a QFL database 27d, QFE databases 27e and 27g and QFM databases 27f and 27h.

The product knowledge database 27 of Fig. 23 is constituted by the QFA database 27a that is an essential technology, the QFW database 27b, the QFC database 27c, the QFL database 27d, QFE database 27e and 27g that are a factor technology of the essential technology, the QFM databases 27f and 27h. There may be a database of a second factor technology in which the factor technology is further classified. Moreover, classification is further performed, and a multiplex structure in which there are the database of the third factor technology, the database of the fourth factor technology and so on besides the database of the first factor technology and the database of the second factor technology may be adopted.

In the product knowledge database 27, all information relating to the product is accumulated. In this information, the name of the product in which troubles occur and the conditions of the occurrence of the troubles are registered. Accordingly, the conditions of the product to be manufactured are retrieved by the product knowledge database 27, and when the retrieve result is zero, it is proved that no trouble occurs under the condition of the product.

With regard to data to be registered with each database, data such as the specification of the product, the conditions to use the product (guarantee condition), and the manufacturing condition of the product is registered. To be concrete, the following data items are registered.

In the QFA database 27a, data such as the package name, the number of pins, the resin, and the guarantee temperature is recorded.

In the QFW database 27b, data such as the sort of the processes, the condition of the metal layer, and the thickness of the oxide film is recorded.

In the QFC database 27c, data such as the function block circuit lineup and the guarantee frequency is recorded.

In the QFL database 27d, data such as the line and the use conditions is recorded. In addition, the result of the trial product is registered as information with the QFL database 27d, and may be added to the qualification factors.

In the QFE databases 27e and 27g, data such as the manufacturing equipment and the use condition is recorded.

In the QFM databases 27f and 27h, data such as the wire, the oxide film material and the name of the wafer is recorded.

The data structures of the QFA database 27a, the QFW database 27b, the QFC database 27c, the QFL database 27d, the QFE databases 27e and 27g, and the QFM databases 27f and 27h may be stored in a storage medium from which a computer is capable of reading out. This storage medium is read in by a computer system, and stored in the temporary storage unit 25 shown in Fig. 14. This data structure may be executed by the IQS decision server processing control unit 26. Herein, the storage medium includes a medium capable of recording a program, for example, a magnetic disc, an optical disc, a magneto-optical disc, and a magnetic disc. An external memory unit of computers is included in this storage medium.

### (IQS Decision Method by IQS Decision Module)

Next, the decision order of he IQS decision module 26b will be described with reference to Fig. 23. The IQS decision module 26b is module which refers to the product knowledge database 27 and the product database 17, and performs the reliability decision to obtain the QFP result.
(A) When the product order information is input from the person responsible-for-customer terminal 41 shown in Fig. 23 in step S501. the IQS decision module 26b refers to the product knowledge database 27.
(B) Next, the reliability database is referred to in step S502. The QFA database 27a is referred to in step S503, and the QFE database 27e and the QFM database 27f are referred to. Thus, the QFA decision result is obtained. Next, the QFW database 27b is referred to in step S504, and the QFE database 27g and the QFM database 27h are referred to. Thus, the QFW decision result is obtained.
(C) Next, the QFC database 27c is referred to in step S505, and the QFC decision result is obtained. Subsequently, the QFL database 27d is referred to in step S506, and the QFL decision result is obtained. Thus, the QFS decision result is acquired, and the QFP result is stored in step S507.
(D) The QFS result obtained in step S507 is returned to the person responsible-for-customer terminal 41 as the IQS decision result in step S508. The IQS decision result shows either "OK" or "NG". When the IQS decision result is "NG", it is also possible to know the details of the decision indicating which decision item is "NG".

Herein, the description was made for the decision order in the case where the person responsible-for-customer terminal 41 requests the IQS decision. The decision order in the case where the technical expert terminal 42, the approver terminal 43 or the like requests the IQS decision is the same as the above.

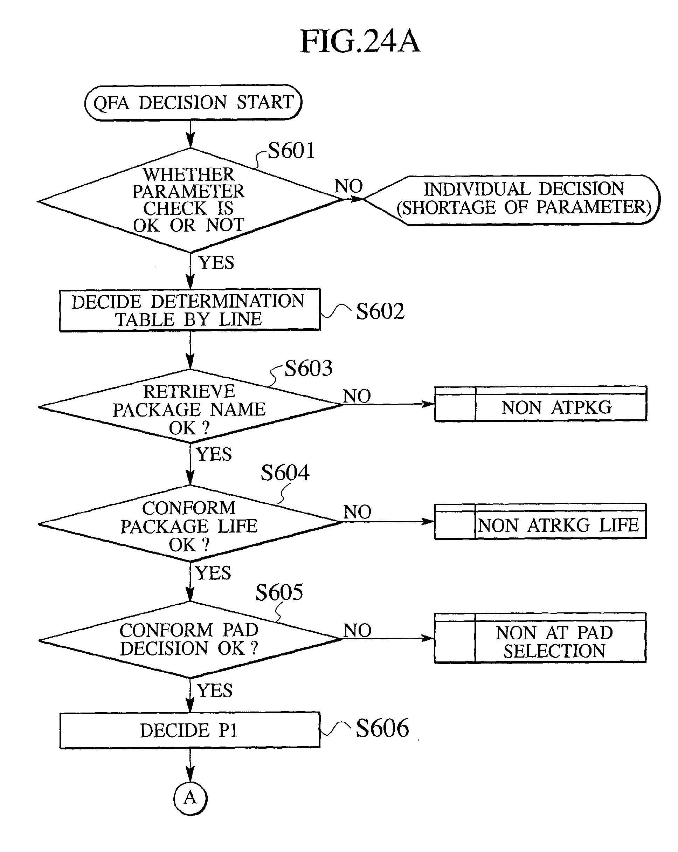

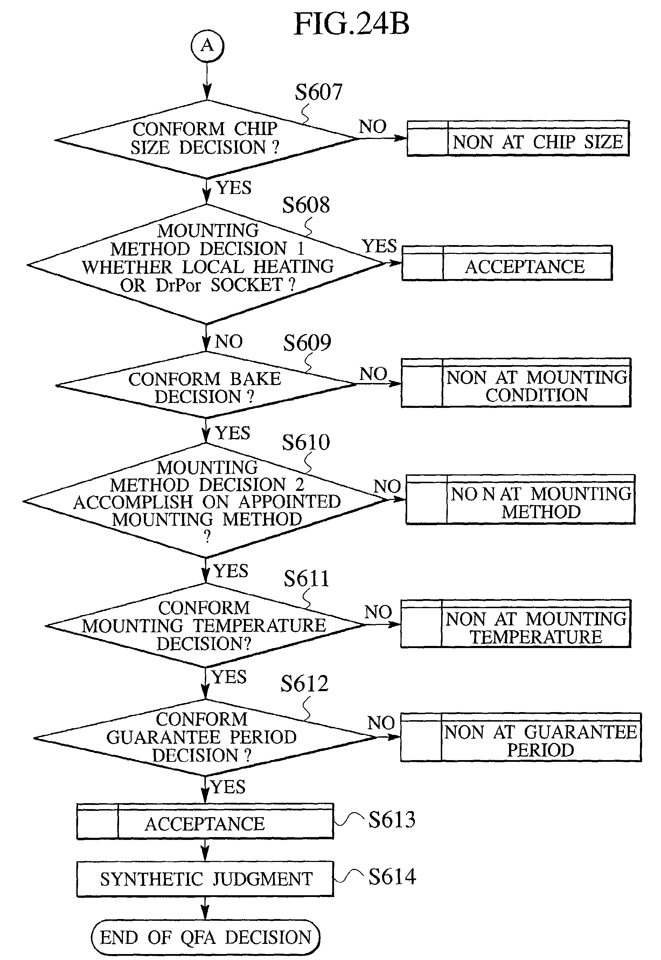

Figs. 24A and 24B are flowcharts of the QFA decision in the IQS decision module 26b. The parameter is retrieved as a key value in each step shown in Figs. 24A and 24B, and the objective record is narrowed down. When the objective record becomes zero, there is no past record of manufacture in the retrieved parameter. The decision result is output.
(A) First, in step S601, checking of the parameters of the input items is performed. The input items in the QFA decision includes the package name, the mounting method, the usage frequency, pad selection, mount temperature condition, expected life, the guarantee period, the necessity of the customer bake, the chip size (X, Y), the assembly line, TjAve (average junction temperature), the maximum temperature guaranteed during the operation of IC, and the maximum ambient temperature. When inputting of the parameters is not correct, the procedure is finished while deciding the result as "individual decision (lack of parameter)".
(B) Next, in step S602, narrowing-down of the record of the database by the assembly line is performed. When the assembly line is passed over, investigations for all assembly lines are conducted.
(C) In step S603, narrowing-down of the record is performed using the package name in the determination table. When the number of objective records is zero, the procedure is finished while deciding as "non-ATPKG".
(D) In step S604, narrowing-down is further performed as to the package life span. When the number of the objective records is zero, the procedure is finished while deciding the result as "non-ATPKG life".
(E) In step S605, narrowing-down is performed as to the pad decision. When the number of the objective records is zero, the procedure is finished while deciding the result as "non-AT pad selection".
(F) In step S606, PI ("whether polyimide is used?") is determined.
(G) In step S607, narrowing-down is performed as to the chip size. When the number of the objective records is zero, the procedure is finished while deciding the result as "non-AT chip size".
(H) In step S608, narrowing-down is performed as to the mounting method. When the mounting method is any of a local heating, TCP (Tape Carrier Packaging), and a socket, the procedure is finished while deciding the result as "acceptance" .
(I) In step S609, the narrowing-down is performed as to the bake decision based on the narrowing-down record of step S607. When the number of the objective records is zero, the procedure is finished while deciding the result as "non-AT mount condition".
(J) In step S610, narrowing-down is further performed as to the mounting method. When there is the past record in the designated mount method, the procedure is finished while deciding the result as "non-AT mount method".
(K) In step S611, narrowing-down is performed as to the mount temperature. When the number of the objective records is zero, the procedure is finished while deciding the result as "non-AT mount temperature".
(L) As a result of narrowing-down as to the guarantee period in step S612, when the number of the objective records is not zero, the procedure is finished in step S613 while deciding the result as "Acceptance". Moreover, in step S614, the synthetic decision is performed, and the QFA decision is finished.
(M) In step S612, narrowing down is performed as to the guarantee period. When the number of the objective record is zero, the procedure is finished while deciding the result as "non-AT mount method".

In the product reliability decision system according to the second embodiment of the present invention, information relating to the parts and the product qualified, which have been developed and manufactured, is stored as knowledge.

By inputting the specification of the product, a salesperson receives the decision indicating whether the product having performance desired by the customer can be manufactured, and can reply to the customer.

For example, when the product is manufactured from the parts already qualified, the salesperson replies the performance of the product that can be manufactured, and the delivery data to the customer. In addition, when the product is manufactured, which includes the parts which were not qualified in spite of having been developed and manufactured, the salesperson replies that the product having the performance desired by the customer cannot be manufactured. Moreover, when the product which the product including parts, which have not been developed and manufactured, is manufactured, the product is developed after the parts are qualified. Accordingly, the salesperson replies that the delivery date of the product will be overdue because of the necessity of the development period and qualification periods for the parts. Moreover, the salesperson replies that there may be a risk that the parts would not be qualified after the development of the parts.

Accordingly, by inputting the specifications of the several products, the performance, the delivery date, the development period and the risk in the respective specifications are output. Therefore, the customer can decide the best specification based on these.

Furthermore, it is possible for the salesperson having poor technical knowledge to make a reply with a high technical factor that must be originally replied by a technical expert.

Still furthermore, since the specification can be determined smoothly in the place of the business negotiation with the customer, it is possible to take full advantage of business opportunities.

Specifically, according to the second embodiment of the present invention, it is possible to provide the product reliability decision system and the product reliability decision method which store the specification, characteristic and reliability of the product developed in the past are stored as knowledge, and decide the characteristic and reliability of a newly developed product at an early stage.

Furthermore, the correlation between the decision and the result in the product development in the past, the background leading to the decision are stored in the database as knowledge, and applied to a model shared and provided, whereby the product development information in the past can be effectively utilized.

Furthermore, since the reliability is judged for each manufacturing process, it is possible to easily detect the step, the equipment and the part material affecting the reliability.

Still furthermore, it is possible to prevent the repeated occurrence of troubles occurred in the past.

### (Other Embodiments)

In the first and second embodiments of the present invention, the descriptions were made for the development of the semiconductor products. However, the present invention can be applied to other products. Furthermore, the present invention is not limited to the product development, and can be applied to the development of software and the provision of service. As a matter of course, the items of a database differ depending on a business applied.

In addition, in the first and second embodiments of the present invention, the three servers including the management server, though the IQS server and the gateway server share the function of the product development management system of the present invention, the same server may realize the same function. On the contrary, the function realized by the management server may be divided into the plurality of servers. Any structure of the server will do as long as the same function realized by the present invention is exhibited.

Furthermore, the individual database may be constructed in one large scale storage unit structurally without providing independent storage units respectively. To be concrete, for example, one database may provide a plurality of tables, thus realizing the same function.

Various modifications will become possible for those skilled in the art after receiving the teachings of the present disclosure without departing from the scope thereof.

## Claims

1. A product development management system, comprising:
a product database storage unit configured to be registered information relating to a product for which an order is registered;
a product knowledge database storage unit to be registered information relating to a product having a past record of manufactures; and
a central processing control unit configured to have a decision module configured to forecast a product after manufacturing by referring to said product database storage unit and said product knowledge database unit and decide whether said product satisfies predetermined conditions.

2. The product development management system of claim 1, wherein said product database storage unit and said product knowledge database storage unit are stored in the same storage unit.

3. The product development management system of claim 1, wherein in said product database storage unit, specification information of said product for which an order is received, and a verification result obtained in a manufacturing process of said product for which an order is received, are stored.

4. The product development management system of claim 1, wherein in said product database storage unit, information is successively updated according to a manufacturing process.

5. The product development management system of claim 1, wherein said central processing control unit configured to process further an approval module configured to approve a movement of the product for which an order is received to a next process, by referring to said product database storage unit and a reliability of said product, which is obtained by said reliability decision module.

6. The product development management system of claim 5,
the product development management system further includes a function verification database storage unit configured to be registered function verification information, which is prepared so as to correspond the information of said product for which an order is received, the information being stored in said product database storage unit, wherein said approval module further refers to said function database storage unit.

7. The product development management system of claim 5, wherein said approval module configured to include at least one module of a simulation process approval module configured to approve a performance of a simulation and a trial manufacturing process approval module for approving a performance of a trial manufacture.

8. The product development management system of claim 5, wherein said approval module configured to include further at least one module of a design process approval module configured to approve a performance of a design of said product for which an order is received, and a mass production process approval module configured to approve a performance of a mass production of said product for which an order is received.

9. The product development management system of claim 1, wherein said central processing control unit configured to process further a product knowledge database register module configured to register the information of said product having the past record of the manufactures with said product knowledge database storage unit.

10. A computer implemented product development management method, comprising:
registering information relating to a product for which an order is received with a product database storage unit;,
further registering a verification result in each manufacturing process of said product for which an order is received with said product database storage unit; and
referring to said product database storage unit and a product knowledge database storage unit with which information relating to a product having a past record of manufactures is registered, and forecasting a product after manufacturing, thus deciding whether said product satisfies a predetermined condition.

11. The computer implemented product development management method of claim 10,
wherein said product database storage unit and said product knowledge database storage unit are referred to; a reliability of said product after mass productions, for which an order is received, is decided; and a movement to a next process is further approved.

12. The computer implemented product development management method according to claim 11,
wherein in approving the movement to a next process, a simulation process of said product for which an order is received is approved; and a trial process of said product for which an order is received is approved.

13. The product development management method according to claim 11,
wherein in approving the movement to a next process, a design process of said product for which an order is received is approved or a mass production of said product for which an order is received is approved.

14. The product development management method according to claim 11,
wherein in approving the movement to a next process, a function verification database storage unit, with which function verification information is registered, is further referred to, the function verification information being prepared so as to correspond to information of said product for which an order is received, which is registered with said product database storage unit.

15. A computer implemented product development management method, comprising:
registering information relating to a product for which an order is received with a product database storage unit;
referring to said product database storage unit with which the information for which an order is received is registered and a product knowledge database storage unit in which information of a product having a past record of manufactures is stored, and forecasting said product after manufacturing, for which an order is received, thus first deciding a reliability of said product for which an order is received;
referring to the reliability of said product form which an order is received, the reliability being obtained in first deciding the reliability, and approving a design process of said product for which an order is received;
upon receipt of the approval of the design process, performing the design process of said product for which an order is received, and further registering a verification result of said design process with said product database storage unit;
referring to said product database storage unit with which the verification result registered and said product knowledge database storage unit, and forecasting said product after manufacturing, for which an order is received, thus second deciding a reliability of said product for which an order is received; and
referring to the reliability of said product for which an order is received, the reliability being obtained in second deciding the reliability, and approving amass production process of said product for which an order is received.

16. The computer implemented product development management method of claim 15,
wherein in approving the design process, verification function information prepared based on the information of said product for which an order is received is further verified; and
in approving the mass production process, the verification result of said design process is further verified based on said verification function information.

17. A computer implemented product development management method, comprising:
registering information of a product for which an order is received with a product database storage unit;
referring to said product database storage unit with which the information of said product for which an order is received is registered and a product knowledge database storage unit in which information of a product having a past record of manufactures is stored, and forecasting said product after mass manufacturing, for which an order is received, thus deciding a reliability of said product for which an order is received;
referring to the reliability of said product for which an order is received, the reliability being obtained in deciding the reliability, and approving a design process of said product for which an order is received;
upon receipt of the approval of said design process, performing the design process of said product for which an order is received, and further registering a verification result of said design process with said product database;
referring to said product database storage unit with which the verification result of said design process is further registered and said product knowledge database storage unit, and forecasting said product after mass manufacturing, for which an order is received, thus second deciding a reliability of said product for which an order is received;
referring to the reliability of said product for which an order is received, the reliability being obtained in second deciding the reliability, and approving a simulation process of said product for which an order is received;
upon receipt of the approval of said simulation process, performing a simulation process of said product for which an order is received, and further registering a verification result of said simulation process with said product database;
referring to said product database storage unit with which the verification result of said simulation process is further registered and said product knowledge database storage unit, and forecasting said product after mass manufacturing, for which an order is receive, thus deciding a reliability of said product for which an order is received; and
referring to the reliability of said product for which an order is received, the reliability being obtained in the third deciding the reliability, and approving a mass production process of said product for which an order is received.

18. The computer implemented product development management method of claim 17,
wherein in approving said design process, further verifying verification function information prepared based on the information of said product for which an order is received;
in approving said simulation process, confirming that the verification result of said design process is verified based on said verification function information; and
in approving said mass manufacture process, confirming that the verification result of said simulation process is verified based on said verification function information.

19. A computer implemented product development management method, comprising:
registering information for which an order is received with a product database storage unit;
referring to said product database storage unit with which the information of said product for which an order is received and a product knowledge database storage unit in which information of a product having a past record of manufactures is stored, and forecasting said product after mass manufacturing, for which an order is received, thus first deciding a reliability of said product for which an order is received;
referring to the reliability of said product for which an order is received, the reliability being obtained in first deciding the reliability, and approving a design process of said product for which an order is received;
upon receipt of the approval of said design process, performing the design process of said product for which an order is received, and further registering a verification result of said design process with said product database storage unit;
referring to said product database storage unit with which the verification result of said design process is further registered and said product knowledge database storage unit, and forecasting said product after manufacturing, for which an order is receive, thus second deciding a reliability of said product for which an order is received;
referring to the reliability of said product for which an order is received, the reliability being obtained in second deciding the reliability, and approving a simulation/trial manufacturing process of said product for which an order is received;
upon receipt of the approval of said simulation/trial manufacturing process, performing the simulation/trail manufacturing process of said product for which an order is received, and further registering a verification result of said simulation/trial manufacturing process with said product database;
referring to said product database storage unit with which the verification result of said simulation/trial manufacturing process is further registered and said product knowledge database storage unit, and forecasting said product after mass manufacturing, for which an order is receive, thus third deciding a reliability of said product for which an order is received; and
referring to the reliability of said product for which an order is received, the reliability being obtained in third deciding the reliability, and approving a mass production process of said product for which an order is received.

20. The computer implemented product development management method of claim 19,
wherein in approving said design process, further verifying verification function information prepared based on the information of said product for which an order is received;
in approving said simulation/trial manufacturing process, confirming that the verification result of said design process is verified based on said verification function information; and
in approving said mass manufacture process, confirming that the verification result of said simulation/trial manufacturing process is verified based on said verification function information.

21. A product reliability decision system, comprising:
an essential technology qualification database storage unit configured to be register a past record of an essential technology for each manufacturing process;
a technology factor qualification database storage unit configured to be registered a past record of a technology factor for each; and
a central processing control unit configured to have a reliability decision module configured to refer to said essential technology qualification database storage unit and said technology factor qualification database storage unit, forecasts a product after manufacturing, and decides whether said product satisfies a predetermined condition.

22. The product reliability decision system of claim 21,
wherein said reliability decision module configured to decide the reliability based on a past record of manufactures when said manufactured product has the past record of manufactures, and decide no occurrence of troubles when the product after manufacturing has no past record of manufacturing.

23. The product reliability decision system of claim 21,
wherein said reliability decision module configured to specify said essential technology and said technology factor, a reliability of each of which is deteriorated, when a decision which does not satisfies any reliability.

24. The product reliability decision system claim 21,
wherein said reliability decision module configured to refer to said technology factor qualification database storage unit configured to decide said technology factor of said manufactured product, and refer to said essential technology database storage unit to decide said essential technology, thus deciding a reliability of said product.

25. The product reliability decision system of claim 21,
wherein said essential technology includes a manufacturing line technology, and information of a manufacturing line which manufactured the product on trial is registered with said essential technology qualification database storage unit.

26. A computer implemented product reliability decision method, comprising:
referring to an essential technology qualification database storage unit with which a past record of each of essential technologies is registered to deciding said essential technology;
referring to a technology factor qualification database storage unit with which a past record of a technical factor for each of said essential technologies is registered to decide the technology factor of each of said essential technologies; and
upon receipt of the decision of said essential technology obtained in deciding said essential technology and upon receipt of the decision of said technology factor for each of said essential technologies obtained in deciding said technology factor, a product after manufacturing is forecasted, and a reliability whether said product satisfies a predetermined condition is decided.

27. The computer implemented product reliability decision method of claim 26,
wherein in deciding said reliability, said reliability is decided based on a manufacturing past record of the product when said manufactured product has said past manufacturing record; and
when said manufactured product has not said past manufacturing record, it is decided that no troubles occurs.

28. The computer implemented product reliability decision method of claim 26,
wherein in deciding said reliability, when it is decided that any reliability is not satisfied, said essential technology and said technology factor which deteriorate the reliability of said manufactured product are specified.

29. The computer implemented product reliability decision method of claim 26,
wherein after said technology factor is decided, said essential technology is decided.

30. The computer implemented product reliability decision method of claim 26,
wherein said essential technology includes a manufacturing line technology, and information of a manufacturing line which manufactured the product on trial is registered with said essential technology qualification database storage unit.
